(19) Europäisches Patentamt
European Patent Office
Office européen des brevets

(11) **EP 4 309 019 B1**

(12) **EUROPEAN PATENT SPECIFICATION**

(45) Date of publication and mention
of the grant of the patent:
**08.10.2025   Bulletin 2025/41**

(21) Application number: **22796335.2**

(22) Date of filing: **15.03.2022**

(51) International Patent Classification (IPC):
*B60W 30/09* (2012.01)       *B60W 60/00* (2020.01)

(52) Cooperative Patent Classification (CPC):
**B60W 30/09; B60W 30/0953; B60W 30/0956;
B60W 60/0017; B60W 60/0027;** B60W 2420/408;
B60W 2554/4029; B60W 2554/4042;
B60W 2554/4045; B60W 2554/801;
B60W 2554/802; B60W 2720/10

(86) International application number:
**PCT/US2022/020390**

(87) International publication number:
**WO 2022/231715 (03.11.2022 Gazette 2022/44)**

(54) **TRAJECTORY CHECKER**

TRAJEKTORIENPRÜFER

VÉRIFICATEUR DE TRAJECTOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **15.03.2021   US 202163161412 P**

(43) Date of publication of application:
**24.01.2024   Bulletin 2024/04**

(73) Proprietor: **Motional AD LLC
Boston, MA 02210 (US)**

(72) Inventors:
• **THOMAS, Stephen L.
Boston, Massachusetts 02210 (US)**
• **ALAHMAD, Bader
Boston, Massachusetts 02210 (US)**

(74) Representative: **Fish & Richardson P.C.
Highlight Business Towers
Mies-van-der-Rohe-Straße 8
80807 München (DE)**

(56) References cited:
EP-A1- 2 902 290          WO-A1-2017/200757
CN-A- 111 497 840         US-A1- 2017 210 358
US-A1- 2019 011 910       US-A1- 2019 243 371
US-A1- 2021 009 121       US-A1- 2023 192 078

EP 4 309 019 B1

**Description**

FIELD OF THE INVENTION

This description relates to trajectory checking of an autonomous vehicle.

BACKGROUND

Autonomous vehicles (AVs) typically calculate a number of possible trajectories that may be used to traverse a given space or environment.

EP 2902290 A1 describes a collision avoidance system for a vehicle that includes an electronic brake system capable of applying wheel brakes to decelerate the vehicle, a steering system capable of changing a steering angle for the vehicle, and a controller. The controller includes instructions for performing a pedestrian avoidance maneuver including at least one of steering the vehicle to the maximum available separation distance and braking the vehicle to the maximum safe speed while the vehicle is passing the pedestrian.

SUMMARY

The invention is defined by the appended claims. The following table shows the conversion of non-SI units as referred to in the description and figures to corresponding SI units:

| Non-SI Unit | SI Unit |
| --- | --- |
| 1 mile | 1.61 km |
| 1 mph | 0.45 m/s or 1.61 km/h |
| 1 ft | 30.48 cm or 0.3048 m |

BRIEF DESCRIPTION OF THE DRAWINGS

FIG. 1 shows an example of a vehicle having autonomous capability.
FIG. 2 shows an example "cloud" computing environment.
FIG. 3 shows a computer system.
FIG. 4 shows an example architecture for an autonomous vehicle.
FIG. 5 shows an example of inputs and outputs that can be used by a perception system.
FIG. 6 shows an example of a LiDAR system.
FIG. 7 shows the LiDAR system in operation.
FIG. 8 shows the operation of the LiDAR system in additional detail.
FIG. 9 shows a block diagram of the relationships between inputs and outputs of a planning system.
FIG. 10 shows a directed graph used in path planning.
FIG. 11 shows a block diagram of the inputs and outputs of a control system.
FIG. 12 shows a block diagram of the inputs, outputs, and components of a controller.
FIGS. 13A and 13B illustrate an example of trajectory safety checking and corresponding adjustments.
FIG. 14 shows an example process 1400 for performing safety checks on one or more trajectories of a vehicle.

DETAILED DESCRIPTION

In the following description, for the purposes of explanation, numerous specific details are set forth in order to provide a thorough understanding of the present disclosure. It will be apparent, however, that the present disclosure can be practiced without these specific details. In other instances, well-known structures and devices are shown in block diagram form in order to avoid unnecessarily obscuring the present disclosure.

In the drawings, specific arrangements or orderings of schematic elements, such as those representing devices, modules, systems, instruction blocks, and data elements, are shown for ease of description. However, it should be understood by those skilled in the art that the specific ordering or arrangement of the schematic elements in the drawings is not meant to imply that a particular order or sequence of processing, or separation of processes, is required. Further, the inclusion of a schematic element in a drawing is not meant to imply that such element is required in all embodiments or that the features represented by such element may not be included in or combined with other elements in some embodiments.

Further, in the drawings, where connecting elements, such as solid or dashed lines or arrows, are used to illustrate a connection, relationship, or association between or among two or more other schematic elements, the absence of any such connecting elements is not meant to imply that no connection, relationship, or association can exist. In other words, some connections, relationships, or associations between elements are not shown in the drawings so as not to obscure the disclosure. In addition, for ease of illustration, a single connecting element is used to represent multiple connections, relationships or associations between elements. For example, where a connecting element represents a communication of signals, data, or instructions, it should be understood by those skilled in the art that such element represents one or multiple signal paths (e.g., a bus), as may be needed, to affect the communication.

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

Several features are described hereafter that can each be used independently of one another or with any combination of other features. However, any individual feature may not address any of the problems discussed above or might only address one of the problems discussed above. Some of the problems discussed above might not be fully addressed by any of the features described herein. Although headings are provided, information related to a particular heading, but not found in the section having that heading, may also be found elsewhere in this description. Embodiments are described herein according to the following outline:

1. General Overview
2. System Overview
3. Autonomous Vehicle Architecture
4. Autonomous Vehicle Inputs
5. Autonomous Vehicle Planning
6. Autonomous Vehicle Control
7. Trajectory Checker
8. Example of Trajectory Safety Checking
9. Example Process for Trajectory Safety Checking

General Overview

In an embodiment, an electronic device that is a component in a vehicle, such as an autonomous vehicle (AV), performs one or more safety checks for planned trajectories of the vehicle to traverse a route. The electronic device is referred to as a trajectory checker (TC) in this disclosure. In an embodiment, the TC is a component of a motion planning subsystem of the vehicle, for example, planning system 404 described in the following sections. The TC addresses higher-level functional safety requirements pertaining to the motion planning for the vehicle.

In an embodiment, as part of planning a trajectory of the vehicle, the TC is presented with a set of candidate AV trajectories and a set of perceived tracked objected identified by a perception system (for example, perception system 402 described below), along with a set of predicted future trajectories for each tracked object over a certain time horizon. The TC checks and ensures that the present trajectory being followed by the vehicle (also referred to as the "ego vehicle trajectory") does not collide with any of the perceived tracked objects identified by the perception system. In particular, the TC determines whether a minimum safe distance can be maintained between the vehicle and the tracked objects, which can be moving along respective predicted trajectories. In addition, in some cases, the TC performs plausibility checks on the vehicle's candidate trajectory, for example, ensuring that the candidate trajectory is physically executable or "followable" by the vehicle, that is, the candidate trajectory does not have discontinuities that would render following the trajectory physically impossible. In an embodiment, operations of the TC are specified using a set of technical safety requirements (TSRs). A TSR describes one or more safety checks that the TC performs and actions taken by the TC in response to results of various checks against various input scenarios.

The subject matter described herein can provide several technical benefits. For example, the safety checks performed by the TC result in safe movement of the vehicle along a route. Risk of collisions with objects along the route is reduced due to evasive maneuvers that can be triggered by the checks performed by the TC.

System Overview

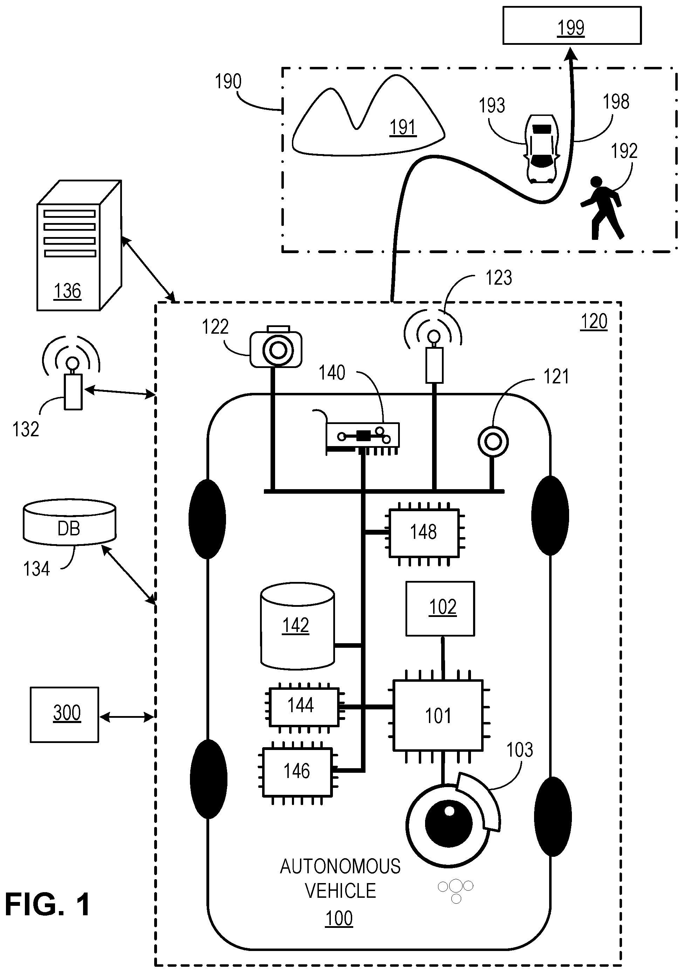

FIG. 1 shows an example of an autonomous vehicle 100 having autonomous capability.

As used herein, the term "autonomous capability" refers to a function, feature, or facility that enables a vehicle to be partially or fully operated without real-time human intervention, including without limitation fully autonomous vehicles, highly autonomous vehicles, and conditionally autonomous vehicles.

As used herein, an autonomous vehicle (AV) is a vehicle that possesses autonomous capability.

As used herein, "vehicle" includes means of transportation of goods or people. For example, cars, buses, trains, airplanes, drones, trucks, boats, ships, submersibles, dirigibles, etc. A driverless car is an example of a vehicle.

As used herein, "trajectory" refers to a path or route to navigate an AV from a first spatiotemporal location to second spatiotemporal location. In an embodiment, the first spatiotemporal location is referred to as the initial or starting location and the second spatiotemporal location is referred to as the destination, final location, goal, goal position, or goal location. In some examples, a trajectory is made up of one or more segments (e.g., sections of road) and each segment is made up of one or more blocks (e.g., portions of a lane or intersection). In an embodiment, the spatiotemporal locations correspond to real world locations. For example, the spatiotemporal locations are pick up or drop-off locations to pick up or drop-off persons or goods.

As used herein, "sensor(s)" includes one or more hardware components that detect information about the environment surrounding the sensor. Some of the hardware components can include sensing components (e.g., image sensors, biometric sensors), transmitting and/or receiving components (e.g., laser or radio frequency wave transmitters and receivers), electronic components such as analog-to-digital converters, a data storage device (such as a RAM and/or a nonvolatile storage), software or firmware components and data processing components such as an ASIC (application-specific integrated circuit), a microprocessor and/or a microcontroller.

As used herein, a "scene description" is a data structure (e.g., list) or data stream that includes one or more classified or labeled objects detected by one or more sensors on the AV vehicle or provided by a source external to the AV.

As used herein, a "road" is a physical area that can be traversed by a vehicle, and may correspond to a named thoroughfare (e.g., city street, interstate freeway, etc.) or may correspond to an unnamed thoroughfare (e.g., a driveway in a house or office building, a section of a parking lot, a section of a vacant lot, a dirt path in a rural area, etc.). Because some vehicles (e.g., 4-wheel-drive pickup trucks, sport utility vehicles, etc.) are capable of traversing a variety of physical areas not specifically adapted for vehicle travel, a "road" may be a physical area not formally defined as a thoroughfare by any municipality or other governmental or administrative body.

As used herein, a "lane" is a portion of a road that can be traversed by a vehicle. A lane is sometimes identified based on lane markings. For example, a lane may correspond to most or all of the space between lane markings, or may correspond to only some (e.g., less than 50%) of the space between lane markings. For example, a road having lane markings spaced far apart might accommodate two or more vehicles between the markings, such that one vehicle can pass the other without traversing the lane markings, and thus could be interpreted as having a lane narrower than the space between the lane markings, or having two lanes between the lane markings. A lane could also be interpreted in the absence of lane markings. For example, a lane may be defined based on physical features of an environment, e.g., rocks and trees along a thoroughfare in a rural area or, e.g., natural obstructions to be avoided in an undeveloped area. A lane could also be interpreted independent of lane markings or physical features. For example, a lane could be interpreted based on an arbitrary path free of obstructions in an area that otherwise lacks features that would be interpreted as lane boundaries. In an example scenario, an AV could interpret a lane through an obstruction-free portion of a field or empty lot. In another example scenario, an AV could interpret a lane through a wide (e.g., wide enough for two or more lanes) road that does not have lane markings. In this scenario, the AV could communicate information about the lane to other AVs so that the other AVs can use the same lane information to coordinate path planning among themselves.

The term "over-the-air (OTA) client" includes any AV, or any electronic device (e.g., computer, controller, IoT device, electronic control unit (ECU)) that is embedded in, coupled to, or in communication with an AV.

The term "over-the-air (OTA) update" means any update, change, deletion or addition to software, firmware, data or configuration settings, or any combination thereof, that is delivered to an OTA client using proprietary and/or standardized wireless communications technology, including but not limited to: cellular mobile communications (e.g., 2G, 3G, 4G, 5G), radio wireless area networks (e.g., Wi-Fi) and/or satellite Internet.

The term "edge node" means one or more edge devices coupled to a network that provide a portal for communication with AVs and can communicate with other edge nodes and a cloud based computing platform, for scheduling and delivering OTA updates to OTA clients.

The term "edge device" means a device that implements an edge node and provides a physical wireless access point (AP) into enterprise or service provider (e.g., VERIZON, AT&T) core networks. Examples of edge devices include but are not limited to: computers, controllers, transmitters, routers, routing switches, integrated access devices (IADs), multiplexers, metropolitan area network (MAN) and wide area network (WAN) access devices.

"One or more" includes a function being performed by one element, a function being performed by more than one element, *e.g.*, in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this description, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

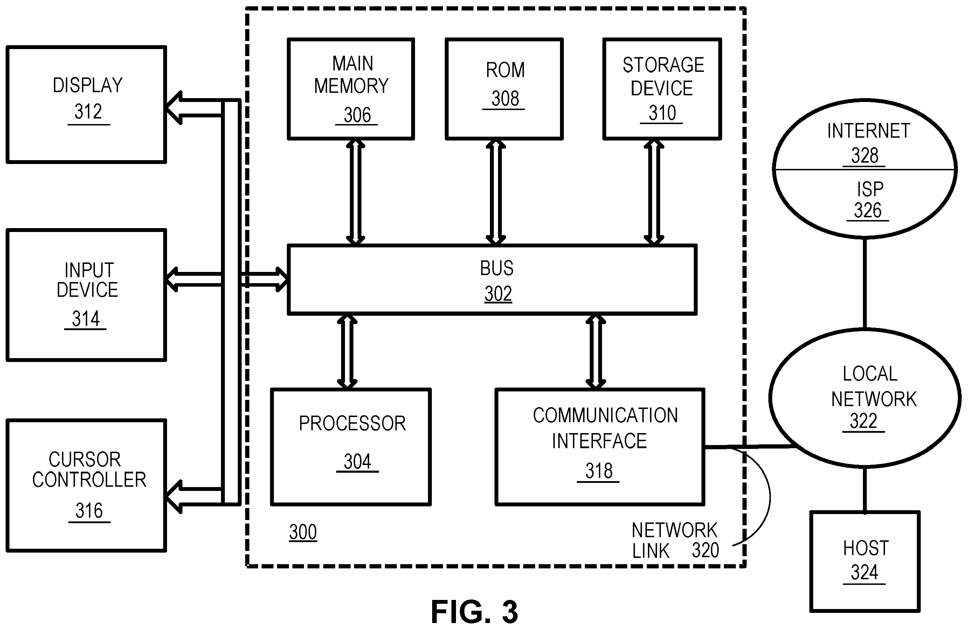

As used herein, an AV system refers to the AV along with the array of hardware, software, stored data, and data generated in real-time that supports the operation of the AV. In an embodiment, the AV system is incorporated within the AV. In an embodiment, the AV system is spread across several locations. For example, some of the software of the AV system is implemented on a cloud computing environment similar to cloud computing environment 300 described below with respect to FIG. 3.

In general, this document describes technologies applicable to any vehicles that have one or more autonomous capabilities including fully autonomous vehicles, highly autonomous vehicles, and conditionally autonomous vehicles, such as so-called Level 5, Level 4 and Level 3 vehicles, respectively (see SAE International's standard J3016: Taxonomy and Definitions for Terms Related to On-Road Motor Vehicle Automated Driving Systems, for more details on the classification of levels of autonomy in vehicles). The technologies described in this document are also applicable to partially autonomous vehicles and driver assisted vehicles, such as so-called Level 2 and Level 1 vehicles (see SAE International's standard J3016: Taxonomy and Definitions for Terms Related to On-Road Motor Vehicle Automated Driving Systems). In an embodiment, one or more of the Level 1, 2, 3, 4 and 5 vehicle systems can automate certain vehicle operations (e.g., steering, braking, and using maps) under certain operating conditions based on processing of sensor inputs. The technologies described in this document can benefit vehicles in any levels, ranging from fully autonomous vehicles to human-operated vehicles.

Autonomous vehicles have advantages over vehicles that require a human driver. One advantage is safety. For example, in 2016, the United States experienced 6 million automobile accidents, 2.4 million injuries, 40,000 fatalities, and 13 million vehicles in crashes, estimated at a societal cost of $910+ billion. U.S. traffic fatalities per 100 million miles traveled have been reduced from about six to about one from 1965 to 2015, in part due to additional safety measures deployed in vehicles. For example, an additional half second of warning that a crash is about to occur is believed to mitigate 60% of front-to-rear crashes. However, passive safety features (e.g., seat belts, airbags) have likely reached their limit in improving this number. Thus, active safety measures, such as automated control of a vehicle, are the likely next step in improving these statistics. Because human drivers are believed to be responsible for a critical pre-crash event in 95% of crashes, automated driving systems are likely to achieve better safety outcomes, e.g., by reliably recognizing and avoiding critical situations better than humans; making better decisions, obeying traffic laws, and predicting future events better than humans; and reliably controlling a vehicle better than a human.

Referring to FIG. 1, an AV system 120 operates the vehicle 100 along a trajectory 198 through an environment 190 to a destination 199 (sometimes referred to as a final location) while avoiding objects (e.g., natural obstructions 191, vehicles 193, pedestrians 192, cyclists, and other obstacles) and obeying rules of the road (e.g., rules of operation or driving preferences).

In an embodiment, the AV system 120 includes devices 101 that are instrumented to receive and act on operational commands from one or more computer processors 146. We use the term "operational command" to mean an executable instruction (or set of instructions) that causes a vehicle to perform an action (e.g., a driving maneuver). Operational commands can, without limitation, including instructions for a vehicle to start moving forward, stop moving forward, start moving backward, stop moving backward, accelerate, decelerate, perform a left turn, and perform a right turn. In an embodiment, computer processor 146 is similar to the processor 304 described below in reference to FIG. 3. Examples of devices 101 include a steering control 102, brakes 103, gears, accelerator pedal or other acceleration control mechanisms, windshield wipers, side-door locks, window controls, and turn-indicators.

In an embodiment, the AV system 120 includes sensors 121 for measuring or inferring properties of state or condition of the vehicle 100, such as the AV's position, linear and angular velocity and acceleration, and heading (e.g., an orientation of the leading end of vehicle 100). Example of sensors 121 are GPS, inertial measurement units (IMU) that measure both vehicle linear accelerations and angular rates, wheel speed sensors for measuring or estimating wheel slip ratios, wheel brake pressure or braking torque sensors, engine torque or wheel torque sensors, and steering angle and angular rate sensors.

In an embodiment, the sensors 121 also include sensors for sensing or measuring properties of the AV's environment. For example, the sensors 121 include monocular or stereo video cameras 122 in the visible light, infrared or thermal (or both) spectra, LiDAR 123, RADAR, ultrasonic sensors, time-of-flight (TOF) depth sensors, speed sensors, temperature sensors, humidity sensors, and precipitation sensors.

In an embodiment, the AV system 120 includes a data storage unit 142 and memory 144 for storing machine instructions associated with computer processor 146 or data collected by sensors 121. In an embodiment, the data storage unit 142 is similar to the ROM 308 or storage device 310 described below in relation to FIG. 3. In an embodiment, memory 144 is similar to the main memory 306 described below. In an embodiment, the data storage unit 142 and memory 144 store historical, real-time, and/or predictive information about the environment 190. In an embodiment, the stored information includes maps, driving performance, traffic congestion updates or weather conditions. In an embodiment, data relating to the environment 190 is transmitted to the vehicle 100 via a communications channel from a remotely located database 134.

In an embodiment, the AV system 120 includes communications devices 140 for communicating measured or inferred properties of other vehicles' states and conditions, such as positions, linear and angular velocities, linear and angular accelerations, and linear and angular headings to the vehicle 100. These devices include Vehicle-to-Vehicle (V2V) and Vehicle-to-Infrastructure (V2I) communication devices and devices for wireless communications over point-to-point or ad hoc networks or both. In an embodiment, the communications devices 140 communicate across the electromagnetic spectrum (including radio and optical communications) or other media (e.g., air and acoustic media). A combination of Vehicle-to-Vehicle (V2V) Vehicle-to-Infrastructure (V2I) communication (and, in some embodiments, one or more other types of communication) is sometimes referred to as Vehicle-to-Everything (V2X) communication. V2X communication typically conforms to one or more communications standards for communication with, between, and among autonomous vehicles.

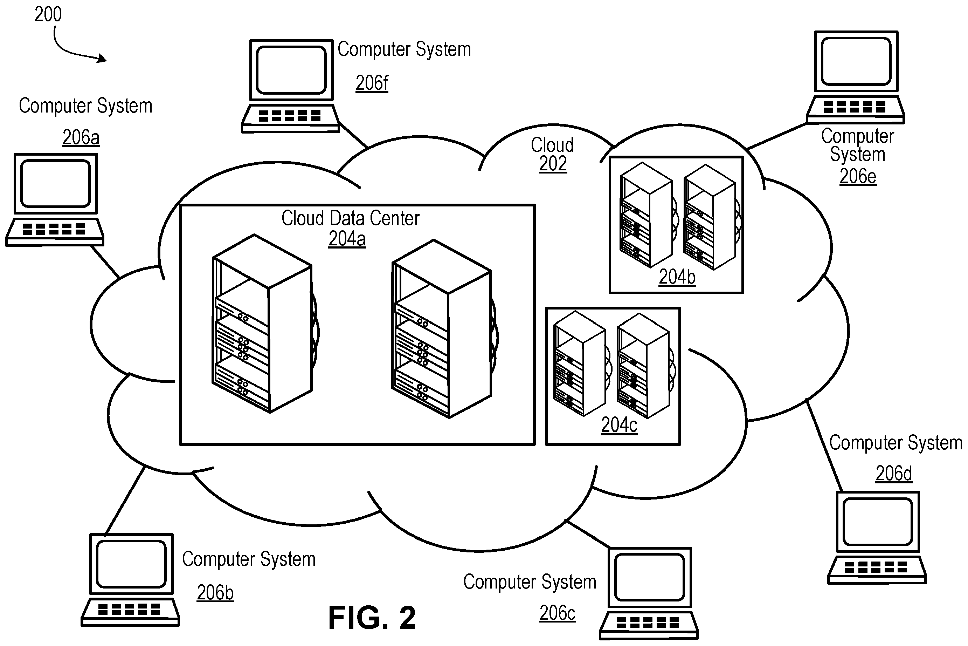

In an embodiment, the communication devices 140 include communication interfaces. For example, wired, wireless, WiMAX, Wi-Fi, Bluetooth, satellite, cellular, optical, near field, infrared, or radio interfaces. The communication interfaces transmit data from a remotely located database 134 to AV system 120. In an embodiment, the remotely located database 134 is embedded in a cloud computing environment 200 as described in FIG. 2. The communication devices 140 transmit data collected from sensors 121 or other data related to the operation of vehicle 100 to the remotely located database 134. In an embodiment, communication devices 140 transmit information that relates to teleoperations to the vehicle 100. In some embodiments, the vehicle 100 communicates with other remote (e.g., "cloud") servers 136.

In an embodiment, the remotely located database 134 also stores and transmits digital data (e.g., storing data such as road and street locations). Such data is stored on the memory 144 on the vehicle 100, or transmitted to the vehicle 100 via a communications channel from the remotely located database 134.

In an embodiment, the remotely located database 134 stores and transmits historical information about driving properties (e.g., speed and acceleration profiles) of vehicles that have previously traveled along trajectory 198 at similar times of day. In one implementation, such data may be stored on the memory 144 on the vehicle 100, or transmitted to the vehicle 100 via a communications channel from the remotely located database 134.

Computer processors 146 located on the vehicle 100 algorithmically generate control actions based on both real-time sensor data and prior information, allowing the AV system 120 to execute its autonomous driving capabilities.

In an embodiment, the AV system 120 includes computer peripherals 132 coupled to computer processors 146 for providing information and alerts to, and receiving input from, a user (e.g., an occupant or a remote user) of the vehicle 100. In an embodiment, computer peripherals 132 are similar to the display 312, input device 314, and cursor controller 316 discussed below in reference to FIG. 3. The coupling is wireless or wired. Any two or more of the interface devices may be integrated into a single device.

In an embodiment, the AV system 120 receives and enforces a privacy level of a passenger, e.g., specified by the passenger or stored in a profile associated with the passenger. The privacy level of the passenger determines how particular information associated with the passenger (e.g., passenger comfort data, biometric data, etc.) is permitted to be used, stored in the passenger profile, and/or stored on the cloud server 136 and associated with the passenger profile. In an embodiment, the privacy level specifies particular information associated with a passenger that is deleted once the ride is completed. In an embodiment, the privacy level specifies particular information associated with a passenger and identifies one or more entities that are authorized to access the information. Examples of specified entities that are authorized to access information can include other AVs, third party AV systems, or any entity that could potentially access the information.

A privacy level of a passenger can be specified at one or more levels of granularity. In an embodiment, a privacy level identifies specific information to be stored or shared. In an embodiment, the privacy level applies to all the information associated with the passenger such that the passenger can specify that none of her personal information is stored or shared. Specification of the entities that are permitted to access particular information can also be specified at various levels of granularity. Various sets of entities that are permitted to access particular information can include, for example, other AVs, cloud servers 136, specific third party AV systems, etc.

In an embodiment, the AV system 120 or the cloud server 136 determines if certain information associated with a passenger can be accessed by the vehicle 100 or another entity. For example, a third-party AV system that attempts to access passenger input related to a particular spatiotemporal location must obtain authorization, e.g., from the AV system 120 or the cloud server 136, to access the information associated with the passenger. For example, the AV system 120 uses the passenger's specified privacy level to determine whether the passenger input related to the spatiotemporal location can be presented to the third-party AV system, the vehicle 100, or to another AV. This enables the passenger's privacy level to specify which other entities are allowed to receive data about the passenger's actions or other data associated with the passenger.

FIG. 2 illustrates an example "cloud" computing environment. Cloud computing is a model of service delivery for enabling convenient, on-demand network access to a shared pool of configurable computing resources (e.g. networks, network bandwidth, servers, processing, memory, storage, applications, virtual machines, and services). In typical cloud computing systems, one or more large cloud data centers house the machines used to deliver the services provided by the cloud. Referring now to FIG. 2, the cloud computing environment 200 includes cloud data centers 204a, 204b, and 204c that are interconnected through the cloud 202. Data centers 204a, 204b, and 204c provide cloud computing services to computer systems 206a, 206b, 206c, 206d, 206e, and 206f connected to cloud 202.

The cloud computing environment 200 includes one or more cloud data centers. In general, a cloud data center, for example the cloud data center 204a shown in FIG. 2, refers to the physical arrangement of servers that make up a cloud, for example the cloud 202 shown in FIG. 2, or a particular portion of a cloud. For example, servers are physically arranged in the cloud datacenter into rooms, groups, rows, and racks. A cloud datacenter has one or more zones, which include one or more rooms of servers. Each room has one or more rows of servers, and each row includes one or more racks. Each rack includes one or more individual server nodes. In some implementation, servers in zones, rooms, racks, and/or rows are arranged into groups based on physical infrastructure requirements of the datacenter facility, which include power, energy, thermal, heat, and/or other requirements. In an embodiment, the server nodes are similar to the computer system described in FIG. 3. The data center 204a has many computing systems distributed through many racks.

The cloud 202 includes cloud data centers 204a, 204b, and 204c along with the network and networking resources (for example, networking equipment, nodes, routers, switches, and networking cables) that interconnect the cloud data centers 204a, 204b, and 204c and help facilitate the computing systems' 206a-f access to cloud computing services. In an embodiment, the network represents any combination of one or more local networks, wide area networks, or internetworks coupled using wired or wireless links deployed using terrestrial or satellite connections. Data exchanged over the network, is transferred using any number of network layer protocols, such as Internet Protocol (IP), Multiprotocol Label Switching (MPLS), Asynchronous Transfer Mode (ATM), Frame Relay, etc. Furthermore, in embodiments where the network represents a combination of multiple sub-networks, different network layer protocols are used at each of the underlying sub-networks. In some embodiments, the network represents one or more interconnected internetworks, such as the public Internet.

The computing systems 206a-f or cloud computing services consumers are connected to the cloud 202 through network links and network adapters. In an embodiment, the computing systems 206a-f are implemented as various computing devices, for example servers, desktops, laptops, tablet, smartphones, Internet of Things (IoT) devices, autonomous vehicles (including, cars, drones, shuttles, trains, buses, etc.) and consumer electronics. In an embodiment, the computing systems 206a-f are implemented in or as a part of other systems.

FIG. 3 illustrates a computer system 300. In an implementation, the computer system 300 is a special purpose computing device. The special-purpose computing device is hard-wired to perform the techniques or includes digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. In various embodiments, the special-purpose computing devices are desktop computer systems, portable computer systems, handheld devices, network devices or any other device that incorporates hard-wired and/or program logic to implement the techniques.

In an embodiment, the computer system 300 includes a bus 302 or other communication mechanism for communicating information, and a processor 304 coupled with a bus 302 for processing information. The processor 304 is, for example, a general-purpose microprocessor. The computer system 300 also includes a main memory 306, such as a random-access memory (RAM) or other dynamic storage device, coupled to the bus 302 for storing information and instructions to be executed by processor 304. In one implementation, the main memory 306 is used for storing temporary variables or other intermediate information during execution of instructions to be executed by the processor 304. Such instructions, when stored in non-transitory storage media accessible to the processor 304, render the computer system 300 into a special-purpose machine that is customized to perform the operations specified in the instructions.

In an embodiment, the computer system 300 further includes a read only memory (ROM) 308 or other static storage device coupled to the bus 302 for storing static information and instructions for the processor 304. A storage device 310, such as a magnetic disk, optical disk, solid-state drive, or three-dimensional cross point memory is provided and coupled to the bus 302 for storing information and instructions.

In an embodiment, the computer system 300 is coupled via the bus 302 to a display 312, such as a cathode ray tube (CRT), a liquid crystal display (LCD), plasma display, light emitting diode (LED) display, or an organic light emitting diode (OLED) display for displaying information to a computer user. An input device 314, including alphanumeric and other keys, is coupled to bus 302 for communicating information and command selections to the processor 304. Another type of user input device is a cursor controller 316, such as a mouse, a trackball, a touch-enabled display, or cursor direction keys for communicating direction information and command selections to the processor 304 and for controlling cursor movement on the display 312. This input device typically has two degrees of freedom in two axes, a first axis (e.g., x-axis) and a second axis (e.g., y-axis), that allows the device to specify positions in a plane.

According to one embodiment, the techniques herein are performed by the computer system 300 in response to the processor 304 executing one or more sequences of one or more instructions contained in the main memory 306. Such instructions are read into the main memory 306 from another storage medium, such as the storage device 310. Execution of the sequences of instructions contained in the main memory 306 causes the processor 304 to perform the process steps described herein. In alternative embodiments, hard-wired circuitry is used in place of or in combination with software instructions.

The term "storage media" as used herein refers to any non-transitory media that store data and/or instructions that cause a machine to operate in a specific fashion. Such storage media includes non-volatile media and/or volatile media. Non-volatile media includes, for example, optical disks, magnetic disks, solid-state drives, or three-dimensional cross point memory, such as the storage device 310. Volatile media includes dynamic memory, such as the main memory 306. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NV-RAM, or any other memory chip or cartridge.

Storage media is distinct from but may be used in conjunction with transmission media. Transmission media participates in transferring information between storage media. For example, transmission media includes coaxial cables, copper wire and fiber optics, including the wires that comprise the bus 302. Transmission media can also take the form of acoustic or light waves, such as those generated during radio-wave and infrared data communications.

In an embodiment, various forms of media are involved in carrying one or more sequences of one or more instructions to the processor 304 for execution. For example, the instructions are initially carried on a magnetic disk or solid-state drive of a remote computer. The remote computer loads the instructions into its dynamic memory and send the instructions over a telephone line using a modem. A modem local to the computer system 300 receives the data on the telephone line and use an infrared transmitter to convert the data to an infrared signal. An infrared detector receives the data carried in the infrared signal and appropriate circuitry places the data on the bus 302. The bus 302 carries the data to the main memory 306, from which processor 304 retrieves and executes the instructions. The instructions received by the main memory 306 can optionally be stored on the storage device 310 either before or after execution by processor 304.

The computer system 300 also includes a communication interface 318 coupled to the bus 302. The communication interface 318 provides a two-way data communication coupling to a network link 320 that is connected to a local network 322. For example, the communication interface 318 is an integrated service digital network (ISDN) card, cable modem, satellite modem, or a modem to provide a data communication connection to a corresponding type of telephone line. As another example, the communication interface 318 is a local area network (LAN) card to provide a data communication connection to a compatible LAN. In some implementations, wireless links are also implemented. In any such implementation, the communication interface 318 sends and receives electrical, electromagnetic, or optical signals that carry digital data streams representing various types of information.

The network link 320 typically provides data communication through one or more networks to other data devices. For example, the network link 320 provides a connection through the local network 322 to a host computer 324 or to a cloud data center or equipment operated by an Internet Service Provider (ISP) 326. The ISP 326 in turn provides data communication services through the world-wide packet data communication network now commonly referred to as the "Internet" 328. The local network 322 and Internet 328 both use electrical, electromagnetic or optical signals that carry digital data streams. The signals through the various networks and the signals on the network link 320 and through the communication interface 318, which carry the digital data to and from the computer system 300, are example forms of transmission media. In an embodiment, the network 320 contains the cloud 202 or a part of the cloud 202 described above.

The computer system 300 sends messages and receives data, including program code, through the network(s), the network link 320, and the communication interface 318. In an embodiment, the computer system 300 receives code for processing. The received code is executed by the processor 304 as it is received, and/or stored in storage device 310, or other non-volatile storage for later execution.

## Autonomous Vehicle Architecture

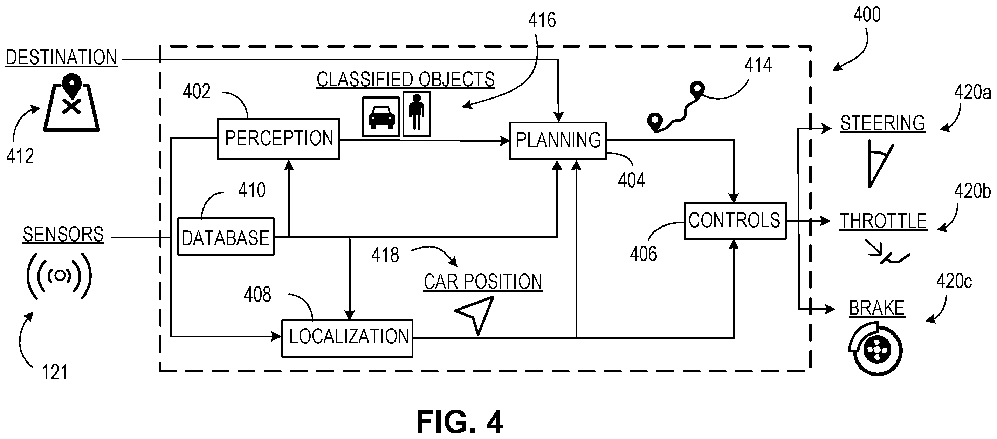

FIG. 4 shows an example architecture 400 for an autonomous vehicle (e.g., the vehicle 100 shown in FIG. 1). The architecture 400 includes a perception system 402 (sometimes referred to as a perception circuit), a planning system 404 (sometimes referred to as a planning circuit), a control system 406 (sometimes referred to as a control circuit), a localization system 408 (sometimes referred to as a localization circuit), and a database system 410 (sometimes referred to as a database circuit). Each system plays a role in the operation of the vehicle 100. Together, the systems 402, 404, 406, 408, and 410 can be part of the AV system 120 shown in FIG. 1. In some embodiments, any of the systems 402, 404, 406, 408, and 410 is a combination of computer software (e.g., executable code stored on a computer-readable medium) and computer hardware (e.g., one or more microprocessors, microcontrollers, application-specific integrated circuits [ASICs]), hardware memory devices, other types of integrated circuits, other types of computer hardware, or a combination of any or all of these things). Each of the systems 402, 404, 406, 408, and 410 is sometimes referred to as a processing circuit (e.g., computer hardware, computer software, or a combination of the two). A combination of any or all of the systems 402, 404, 406, 408, and 410 is also an example of a processing circuit.

In use, the planning system 404 receives data representing a destination 412 and determines data representing a trajectory 414 (sometimes referred to as a route) that can be traveled by the vehicle 100 to reach (e.g., arrive at) the destination 412. In order for the planning system 404 to determine the data representing the trajectory 414, the planning system 404 receives data from the perception system 402, the localization system 408, and the database system 410.

The perception system 402 identifies nearby physical objects using one or more sensors 121, e.g., as also shown in FIG. 1. The objects are classified (e.g., grouped into types such as pedestrian, bicycle, automobile, traffic sign, etc.) and a scene description including the classified objects 416 is provided to the planning system 404.

The planning system 404 also receives data representing the AV position 418 from the localization system 408. The localization system 408 determines the AV position by using data from the sensors 121 and data from the database system 410 (e.g., a geographic data) to calculate a position. For example, the localization system 408 uses data from a GNSS (Global Navigation Satellite System) sensor and geographic data to calculate a longitude and latitude of the AV. In an embodiment, data used by the localization system 408 includes high-precision maps of the roadway geometric properties, maps describing road network connectivity properties, maps describing roadway physical properties (such as traffic speed, traffic volume, the number of vehicular and cyclist traffic lanes, lane width, lane traffic directions, or lane marker types and locations, or combinations of them), and maps describing the spatial locations of road features such as crosswalks, traffic signs or other travel signals of various types. In an embodiment, the high-precision maps are constructed by adding data through automatic or manual annotation to low-precision maps.

The control system 406 receives the data representing the trajectory 414 and the data representing the AV position 418 and operates the control functions 420a-c (e.g., steering, throttling, braking, ignition) of the AV in a manner that will cause the vehicle 100 to travel the trajectory 414 to the destination 412. For example, if the trajectory 414 includes a left turn, the control system 406 will operate the control functions 420a-c in a manner such that the steering angle of the steering function will cause the vehicle 100 to turn left and the throttling and braking will cause the vehicle 100 to pause and wait for passing pedestrians or vehicles before the turn is made.

## Autonomous Vehicle Inputs

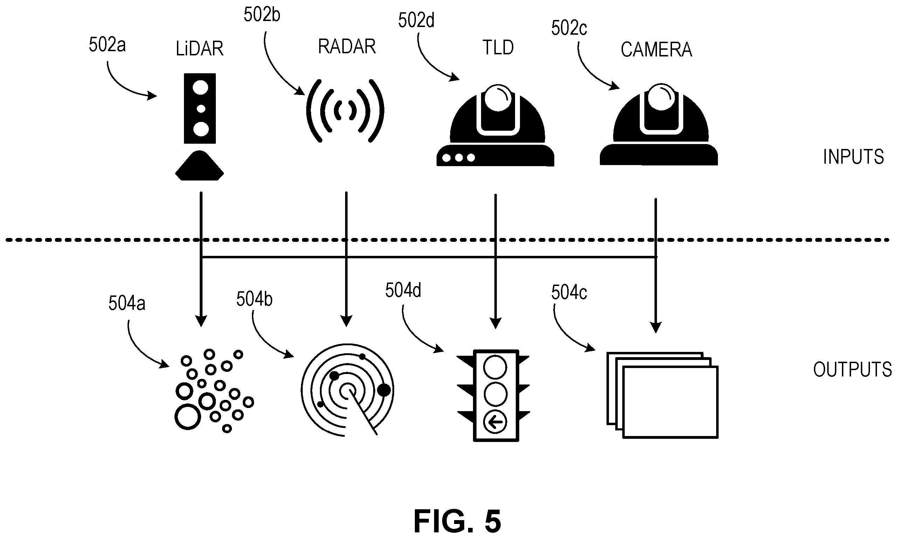

FIG. 5 shows an example of inputs 502a-d (e.g., sensors 121 shown in FIG. 1) and outputs 504a-d (e.g., sensor data) that is used by the perception system 402 (FIG. 4). One input 502a is a LiDAR (Light Detection and Ranging) system (e.g., LiDAR 123 shown in FIG. 1). LiDAR is a technology that uses light (e.g., bursts of light such as infrared light) to obtain data about physical objects in its line of sight. A LiDAR system produces LiDAR data as output 504a. For example, LiDAR data is collections of 3D or 2D points (also known as a point clouds) that are used to construct a representation of the environment 190.

Another input 502b is a RADAR system. RADAR is a technology that uses radio waves to obtain data about nearby physical objects. RADARs can obtain data about objects not within the line of sight of a LiDAR system. A RADAR system 502b produces RADAR data as output 504b. For example, RADAR data are one or more radio frequency electromagnetic signals that are used to construct a representation of the environment 190.

Another input 502c is a camera system. A camera system uses one or more cameras (e.g., digital cameras using a light sensor such as a charge-coupled device [CCD]) to obtain information about nearby physical objects. A camera system produces camera data as output 504c. Camera data often takes the form of image data (e.g., data in an image data format such as RAW, JPEG, PNG, etc.). In some examples, the camera system has multiple independent cameras, e.g., for the purpose of stereopsis (stereo vision), which enables the camera system to perceive depth. Although the objects perceived by the camera system are described here as "nearby," this is relative to the AV. In some embodiments, the camera system is configured to "see" objects far, e.g., up to a kilometer or more ahead of the AV. Accordingly, in some embodiments, the camera system has features such as sensors and lenses that are optimized for perceiving objects that are far away.

Another input 502d is a traffic light detection (TLD) system. A TLD system uses one or more cameras to obtain information about traffic lights, street signs, and other physical objects that provide visual navigation information. A TLD system produces TLD data as output 504d. TLD data often takes the form of image data (e.g., data in an image data format such as RAW, JPEG, PNG, etc.). A TLD system differs from a system incorporating a camera in that a TLD system uses a camera with a wide field of view (e.g., using a wide-angle lens or a fish-eye lens) in order to obtain information about as many physical objects providing visual navigation information as possible, so that the vehicle 100 has access to all relevant navigation information provided by these objects. For example, the viewing angle of the TLD system may be about 120 degrees or more.

In some embodiments, outputs 504a-d are combined using a sensor fusion technique. Thus, either the individual outputs 504a-d are provided to other systems of the vehicle 100 (e.g., provided to a planning system 404 as shown in FIG. 4), or the combined output can be provided to the other systems, either in the form of a single combined output or multiple combined outputs of the same type (e.g., using the same combination technique or combining the same outputs or both) or different types type (e.g., using different respective combination techniques or combining different respective outputs or both). In some embodiments, an early fusion technique is used. An early fusion technique is characterized by combining outputs before one or more data processing steps are applied to the combined output. In some embodiments, a late fusion technique is used. A late fusion technique is characterized by combining outputs after one or more data processing steps are applied to the individual outputs.

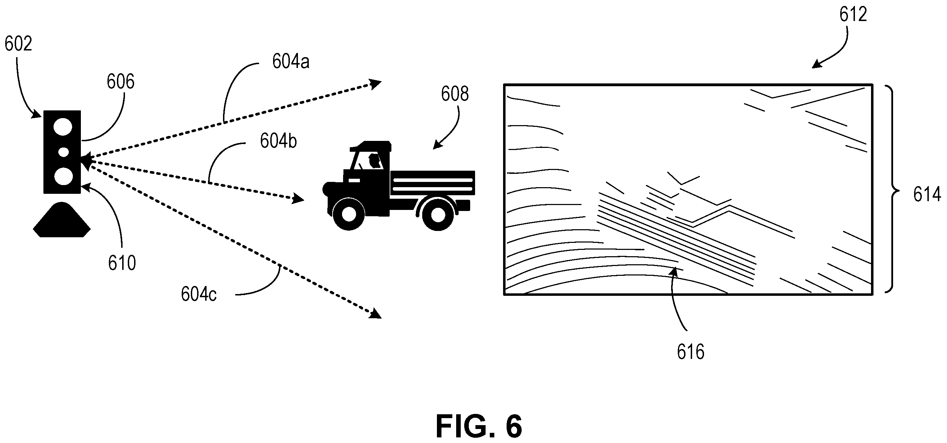

FIG. 6 shows an example of a LiDAR system 602 (e.g., the input 502a shown in FIG. 5). The LiDAR system 602 emits light 604a-c from a light emitter 606 (e.g., a laser transmitter). Light emitted by a LiDAR system is typically not in the visible spectrum; for example, infrared light is often used. Some of the light 604b emitted encounters a physical object 608 (e.g., a vehicle) and reflects back to the LiDAR system 602. (Light emitted from a LiDAR system typically does not penetrate physical objects, e.g., physical objects in solid form.) The LiDAR system 602 also has one or more light detectors 610, which detect the reflected light. In an embodiment, one or more data processing systems associated with the LiDAR system generates an image 612 representing the field of view 614 of the LiDAR system. The image 612 includes information that represents the boundaries 616 of a physical object 608. In this way, the image 612 is used to determine the boundaries 616 of one or more physical objects near an AV.

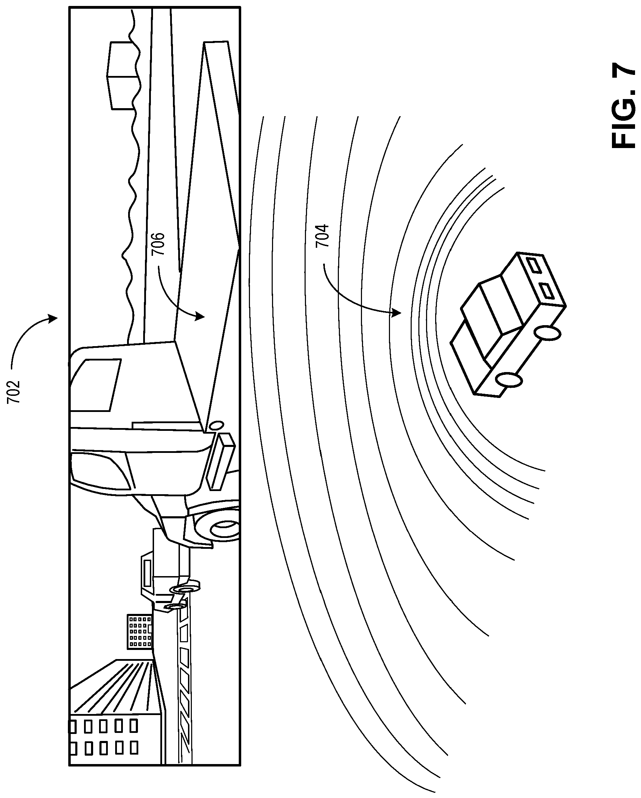

FIG. 7 shows the LiDAR system 602 in operation. In the scenario shown in this figure, the vehicle 100 receives both camera system output 504c in the form of an image 702 and LiDAR system output 504a in the form of LiDAR data points 704. In use, the data processing systems of the vehicle 100 compares the image 702 to the data points 704. In particular, a physical object 706 identified in the image 702 is also identified among the data points 704. In this way, the vehicle 100 perceives the boundaries of the physical object based on the contour and density of the data points 704.

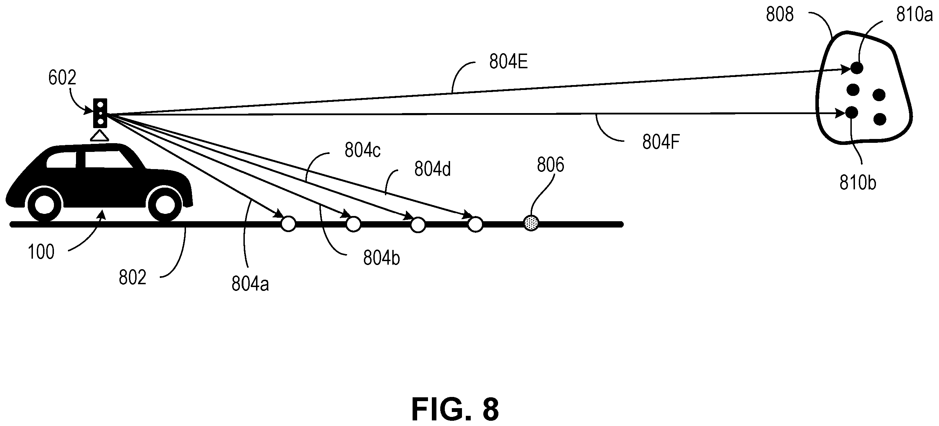

FIG. 8 shows the operation of the LiDAR system 602 in additional detail. As described above, the vehicle 100 detects the boundary of a physical object based on characteristics of the data points detected by the LiDAR system 602. As shown in FIG. 8, a flat object, such as the ground 802, will reflect light 804a-d emitted from a LiDAR system 602 in a consistent manner. Put another way, because the LiDAR system 602 emits light using consistent spacing, the ground 802 will reflect light back to the LiDAR system 602 with the same consistent spacing. As the vehicle 100 travels over the ground 802, the LiDAR system 602 will continue to detect light reflected by the next valid ground point 806 if nothing is obstructing the road. However, if an object 808 obstructs the road, light 804e-f emitted by the LiDAR system 602 will be reflected from points 810a-b in a manner inconsistent with the expected consistent manner. From this information, the vehicle 100 can determine that the object 808 is present.

Path Planning

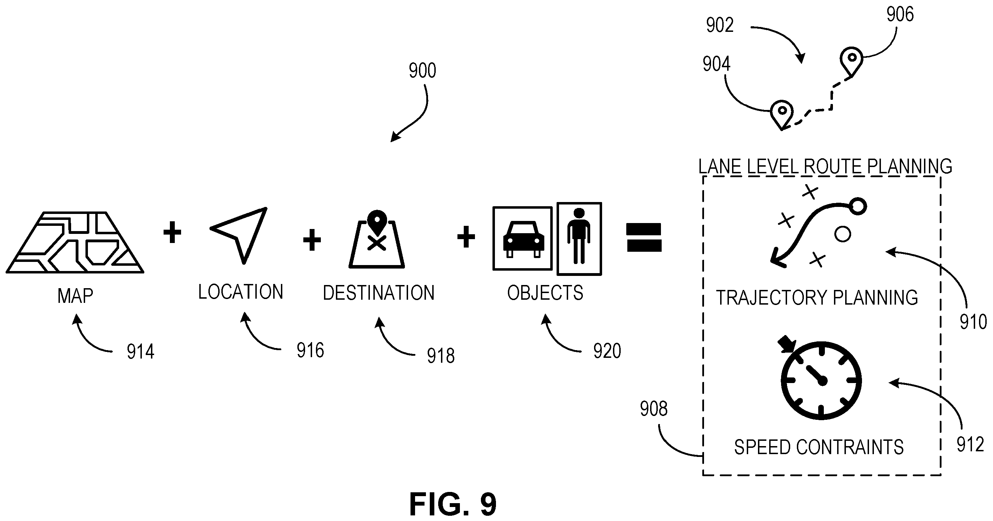

FIG. 9 shows a block diagram 900 of the relationships between inputs and outputs of a planning system 404 (e.g., as shown in FIG. 4). In general, the output of a planning system 404 is a route 902 from a start point 904 (e.g., source location or initial location), and an end point 906 (e.g., destination or final location). The route 902 is typically defined by one or more segments. For example, a segment is a distance to be traveled over at least a portion of a street, road, highway, driveway, or other physical area appropriate for automobile travel. In some examples, e.g., if the vehicle 100 is an off-road capable vehicle such as a four-wheel-drive (4WD) or all-wheel-drive (AWD) car, SUV, pick-up truck, or the like, the route 902 includes "off-road" segments such as unpaved paths or open fields.

In addition to the route 902, a planning system also outputs lane-level route planning data 908. The lane-level route planning data 908 is used to traverse segments of the route 902 based on conditions of the segment at a particular time. For example, if the route 902 includes a multi-lane highway, the lane-level route planning data 908 includes trajectory planning data 910 that the vehicle 100 can use to choose a lane among the multiple lanes, e.g., based on whether an exit is approaching, whether one or more of the lanes have other vehicles, or other factors that vary over the course of a few minutes or less. Similarly, in some implementations, the lane-level route planning data 908 includes speed constraints 912 specific to a segment of the route 902. For example, if the segment includes pedestrians or un-expected traffic, the speed constraints 912 may limit the vehicle 100 to a travel speed slower than an expected speed, e.g., a speed based on speed limit data for the segment.

In an embodiment, the inputs to the planning system 404 includes database data 914 (e.g., from the database system 410 shown in FIG. 4), current location data 916 (e.g., the AV position 418 shown in FIG. 4), destination data 918 (e.g., for the destination 412 shown in FIG. 4), and object data 920 (e.g., the classified objects 416 as perceived by the perception system 402 as shown in FIG. 4). In some embodiments, the database data 914 includes rules used in planning. Rules are specified using a formal language, e.g., using Boolean logic. In any given situation encountered by the vehicle 100, at least some of the rules will apply to the situation. A rule applies to a given situation if the rule has conditions that are met based on information available to the vehicle 100, e.g., information about the surrounding environment. Rules can have priority. For example, a rule that says, "if the road is a freeway, move to the leftmost lane" can have a lower priority than "if the exit is approaching within a mile, move to the rightmost lane."

As indicated previously, in an embodiment, the planning system 404 includes a Trajectory Checker (TC) component. In an embodiment, the TC is realized as a hardware electronic device that is part of the planning system 404. For example, the TC can be a microcomputer, a microcontroller, a general purpose processor or special purpose processor (e.g., FPGA or ASIC) that execute instructions to realize the safety check operations of the TC. In another embodiment, software routines corresponding to the safety check operations of the TC are programmed in memory of the planning system 404, and executed by the planning system hardware, such as processors. Examples of the safety check operations performed by the TC are described in detail in a following section.

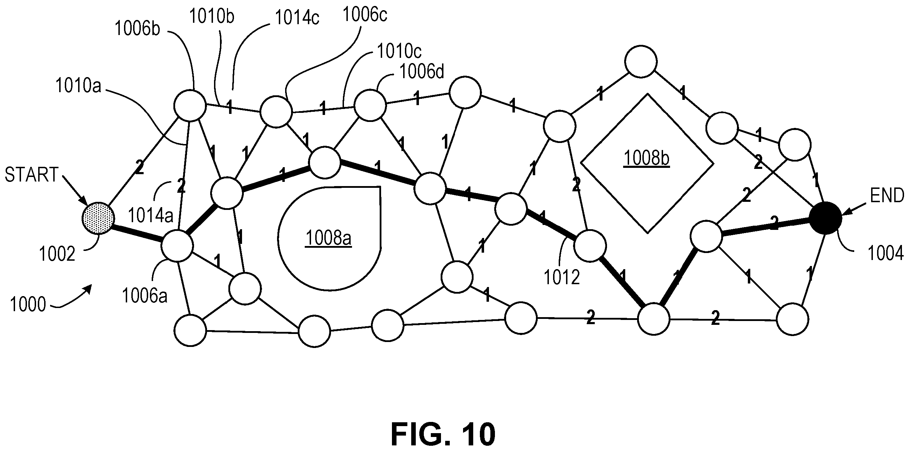

FIG. 10 shows a directed graph 1000 used in path planning, e.g., by the planning system 404 (FIG. 4). In general, a directed graph 1000 like the one shown in FIG. 10 is used to determine a path between any start point 1002 and end point 1004. In real-world terms, the distance separating the start point 1002 and end point 1004 may be relatively large (e.g., in two different metropolitan areas) or may be relatively small (e.g., two intersections abutting a city block or two lanes of a multi-lane road).

In an embodiment, the directed graph 1000 has nodes 1006a-d representing different locations between the start point 1002 and the end point 1004 that could be occupied by a vehicle 100. In some examples, e.g., when the start point 1002 and end point 1004 represent different metropolitan areas, the nodes 1006a-d represent segments of roads. In some examples, e.g., when the start point 1002 and the end point 1004 represent different locations on the same road, the nodes 1006a-d represent different positions on that road. In this way, the directed graph 1000 includes information at varying levels of granularity. In an embodiment, a directed graph having high granularity is also a subgraph of another directed graph having a larger scale. For example, a directed graph in which the start point 1002 and the end point 1004 are far away (e.g., many miles apart) has most of its information at a low granularity and is based on stored data, but also includes some high granularity information for the portion of the graph that represents physical locations in the field of view of the vehicle 100.

The nodes 1006a-d are distinct from objects 1008a-b which cannot overlap with a node. In an embodiment, when granularity is low, the objects 1008a-b represent regions that cannot be traversed by automobile, e.g., areas that have no streets or roads. When granularity is high, the objects 1008a-b represent physical objects in the field of view of the vehicle 100, e.g., other automobiles, pedestrians, or other entities with which the vehicle 100 cannot share physical space. In an embodiment, some or all of the objects 1008a-b are a static objects (e.g., an object that does not change position such as a street lamp or utility pole) or dynamic objects (e.g., an object that is capable of changing position such as a pedestrian or other car).

The nodes 1006a-d are connected by edges 1010a-c. If two nodes 1006a-b are connected by an edge 1010a, it is possible for a vehicle 100 to travel between one node 1006a and the other node 1006b, e.g., without having to travel to an intermediate node before arriving at the other node 1006b. (When we refer to a vehicle 100 traveling between nodes, we mean that the vehicle 100 travels between the two physical positions represented by the respective nodes.) The edges 1010a-c are often bidirectional, in the sense that and vehicle 100 travels from a first node to a second node, or from the second node to the first node. In an embodiment, edges 1010a-c are unidirectional, in the sense that an vehicle 100 can travel from a first node to a second node, however the vehicle 100 cannot travel from the second node to the first node. Edges 1010a-c are unidirectional when they represent, for example, one-way streets, individual lanes of a street, road, or highway, or other features that can only be traversed in one direction due to legal or physical constraints.

In an embodiment, the planning system 404 uses the directed graph 1000 to identify a path 1012 made up of nodes and edges between the start point 1002 and end point 1004.

An edge 1010a-c has an associated cost 1014a-b. The cost 1014a-b is a value that represents the resources that will be expended if the vehicle 100 chooses that edge. A typical resource is time. For example, if one edge 1010a represents a physical distance that is twice that as another edge 1010b, then the associated cost 1014a of the first edge 1010a may be twice the associated cost 1014b of the second edge 1010b. Other factors that affect time include expected traffic, number of intersections, speed limit, etc. Another typical resource is fuel economy. Two edges 1010a-b may represent the same physical distance, but one edge 1010a may require more fuel than another edge 1010b, e.g., because of road conditions, expected weather, etc.

When the planning system 404 identifies a path 1012 between the start point 1002 and end point 1004, the planning system 404 typically chooses a path optimized for cost, e.g., the path that has the least total cost when the individual costs of the edges are added together.

Autonomous Vehicle Control

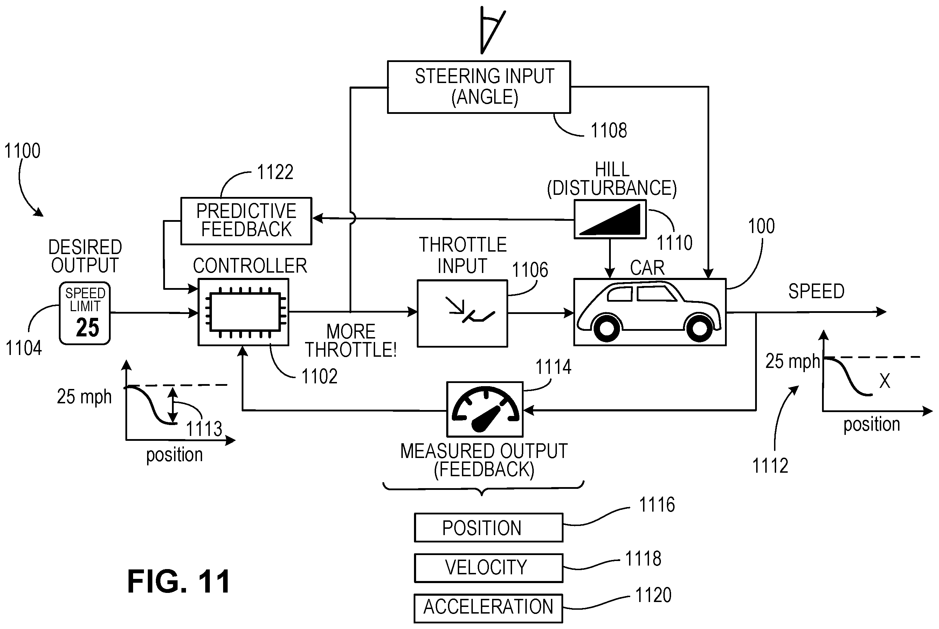

FIG. 11 shows a block diagram 1100 of the inputs and outputs of a control system 406 (e.g., as shown in FIG. 4). A control system operates in accordance with a controller 1102 which includes, for example, one or more processors (e.g., one or more computer processors such as microprocessors or microcontrollers or both) similar to processor 304, short-term and/or long-term data storage (e.g., memory random-access memory or flash memory or both) similar to main memory 306, ROM 1308, and storage device 210, and instructions stored in memory that carry out operations of the controller 1102 when the instructions are executed (e.g., by the one or more processors).

In an embodiment, the controller 1102 receives data representing a desired output 1104. The desired output 1104 typically includes a velocity, e.g., a speed and a heading. The desired output 1104 can be based on, for example, data received from a planning system 404 (e.g., as shown in FIG. 4). In accordance with the desired output 1104, the controller 1102 produces data usable as a throttle input 1106 and a steering input 1108. The throttle input 1106 represents the magnitude in which to engage the throttle (e.g., acceleration control) of an vehicle 100, e.g., by engaging the steering pedal, or engaging another throttle control, to achieve the desired output 1104. In some examples, the throttle input 1106 also includes data usable to engage the brake (e.g., deceleration control) of the vehicle 100. The steering input 1108 represents a steering angle, e.g., the angle at which the steering control (e.g., steering wheel, steering angle actuator, or other functionality for controlling steering angle) of the AV should be positioned to achieve the desired output 1104.

In an embodiment, the controller 1102 receives feedback that is used in adjusting the inputs provided to the throttle and steering. For example, if the vehicle 100 encounters a disturbance 1110, such as a hill, the measured speed 1112 of the vehicle 100 is lowered below the desired output speed. In an embodiment, any measured output 1114 is provided to the controller 1102 so that the necessary adjustments are performed, e.g., based on the differential 1113 between the measured speed and desired output. The measured output 1114 includes measured position 1116, measured velocity 1118, (including speed and heading), measured acceleration 1120, and other outputs measurable by sensors of the vehicle 100.

In an embodiment, information about the disturbance 1110 is detected in advance, e.g., by a sensor such as a camera or LiDAR sensor, and provided to a predictive feedback system 1122. The predictive feedback system 1122 then provides information to the controller 1102 that the controller 1102 can use to adjust accordingly. For example, if the sensors of the vehicle 100 detect ("see") a hill, this information can be used by the controller 1102 to prepare to engage the throttle at the appropriate time to avoid significant deceleration.

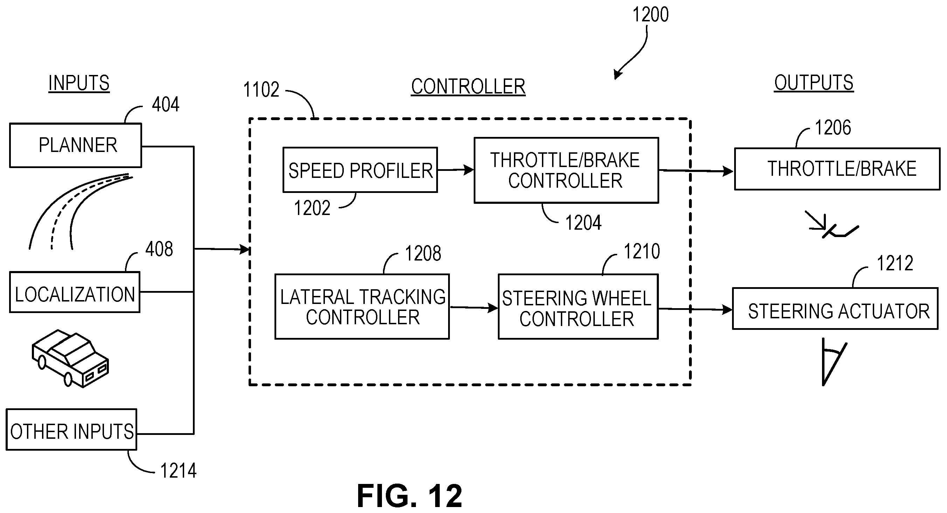

FIG. 12 shows a block diagram 1200 of the inputs, outputs, and components of the controller 1102. The controller 1102 has a speed profiler 1202 which affects the operation of a throttle/brake controller 1204. For example, the speed profiler 1202 instructs the throttle/brake controller 1204 to engage acceleration or engage deceleration using the throttle/brake 1206 depending on, e.g., feedback received by the controller 1102 and processed by the speed profiler 1202.

The controller 1102 also has a lateral tracking controller 1208 which affects the operation of a steering controller 1210. For example, the lateral tracking controller 1208 instructs the steering controller 1204 to adjust the position of the steering angle actuator 1212 depending on, e.g., feedback received by the controller 1102 and processed by the lateral tracking controller 1208.

The controller 1102 receives several inputs used to determine how to control the throttle/brake 1206 and steering angle actuator 1212. A planning system 404 provides information used by the controller 1102, for example, to choose a heading when the vehicle 100 begins operation and to determine which road segment to traverse when the vehicle 100 reaches an intersection. A localization system 408 provides information to the controller 1102 describing the current location of the vehicle 100, for example, so that the controller 1102 can determine if the vehicle 100 is at a location expected based on the manner in which the throttle/brake 1206 and steering angle actuator 1212 are being controlled. In an embodiment, the controller 1102 receives information from other inputs 1214, e.g., information received from databases, computer networks, etc.

Trajectory Checker

As previously noted, in an embodiment, an AV includes a Trajectory Checker (TC) component that performs safety checks on candidate trajectories for the vehicle, including the present ego vehicle trajectory. In some embodiments, the TC is a component of the planning system 404.

In an embodiment, the planning system 404 provides, to the TC, a set of perceived tracked objects (for example, a pedestrian, another vehicle, a bicycle, among others) identified by the perception system 402, along with a set of predicted future trajectories for each tracked object over a specified time horizon. The TC performs operations, described below, to ensure that the movement of the AV following the predicted trajectory along its route does not lead to a collision with any of the tracked objects moving along their respective predicted trajectories. In particular, the TC determines whether a certain distance, for example, a minimum safe distance, can be maintained between the AV and every tracked object along their respective predicted trajectories. In an embodiment, the determination made by the TC causes the planning system 404 to adjust the driving behavior of the AV to maintain a safe distance. This can include, for example, changing the speed of the AV (e.g., slowing down or speeding up); changing the trajectory to circumvent a tracked object on the path; or causing the AV to stop moving to avoid a collision, among other adjustments.

In addition to driving in a safe manner, the AV also abides by legal driving rules, for example, obeying laws governing traffic lights, stop signs, yield signs, among others. From a functional perspective, in an embodiment, the planning/control architecture (for example, the planning system 404 or the control system 406, or both) are configured such that the safety checks for trajectories is done by the TC, while checking conformance with legal rules is performed by a trajectory ranker component before the safety checks by the TC. The trajectory ranker is also a component of the planning system 404, and it checks whether each candidate trajectory respects legal driving rules that are formulated as formal rulebook-based expressions with well-defined quantitative metrics that measure the "degree" of driving law violation of a trajectory.

In an embodiment, the trajectory ranker component is connected to the TC, e.g., directly preceding the TC in the planning system 404. In such cases, a set of candidate trajectories are fed into the trajectory ranker before they are provided to the TC. The trajectory ranker produces an ordering of its input trajectories such that trajectories that violate legal rules less are ranked higher compared to trajectories with more violations. These ranked candidate trajectories are then fed into the TC, which outputs the highest ranked (for example, a trajectory that violates the legal driving rules the least in the set of candidate trajectories) trajectory that is safe, if any. In some cases, the TC outputs more than one candidate trajectory that the TC determines are safe, and are also ranked higher than the other candidate trajectories with respect to conformance with legal driving rules.

As an example, of the interplay between the trajectory ranker and the TC, a candidate trajectory may be specified such that the AV crosses a red traffic light on a road where it is safe to cross the red light (e.g., there are no pedestrians or other vehicles whose predicted trajectories can contribute to the occurrence of a collision with the AV). The TC may determine that this trajectory is safe, and add it to the list of safe trajectories for output. However, the trajectory ranker will rank this trajectory among the lowest of the candidate trajectories because of the clear legal rule violation (e.g., driving through a red light). Since the TC will output safe trajectories ordered such that the most law-abiding trajectories (highest ranked trajectories by the trajectory ranker) are preferred, the TC is unlikely to output this trajectory as a top selection. Accordingly, it is highly unlikely that planning system will use a red light-crossing trajectory as the safe trajectory that the AV will follow.

In an embodiment, the operations of the trajectory ranker and the TC are combined in a single component in the planning system 404. In such cases, the legal driving-rule conformance check and the safety checks are performed by the same component. However, in the following sections, the description of operations performed by the TC is with respect to embodiments in which the trajectory ranker is a separate component from the TC, as described above. It is to be understood that the disclosure would also apply in some cases, as appropriate, to embodiments in which the trajectory ranker and the TC are combined in a single component.

In an embodiment, the candidate AV trajectories that are provided as input to the TC are in two categories:

1. A set of nominal trajectories that are generated by the planning system 404 (e.g., by a model predictive control, MPC component of the planning system); or
2. A safe stop maneuver, specifically referred to as a Safe Stop Action (SSA).

The output of the TC can be specified as follows:

1. If the TC determines at least one input candidate trajectory as "safe," the output of the TC is a set of one or more safe trajectories.
2. If the TC determines that no input candidate trajectory is safe (be it a nominal trajectory or an SSA), the output of the TC is an empty set.

The following sections describe formal rules related to trajectory-checking by the TC. These sections include references to an agent or an ego vehicle with respect to which trajectory checking is performed. In an embodiment, the AV is an example of an agent or an ego vehicle.

*Definitions and Assumptions*

As used herein, a "trajectory" is defined as a function $\tau : \mathbb{R}_+ \dashrightarrow \mathbb{R}^k$ , where, at time instant t > 0 seconds from the current time, r(t) is a k-vector consisting of the trajectory information such as the position coordinates *x, y,* heading, steering angle δ, etc.

Assumption 1: It is assumed that the trajectory is discretized and is given as a finite sequence $r(t_0), r(t_1), ..., r(t_N)$ for some non-negative real numbers $0 < t_0 < t_1 < \cdots < t_N$ and integer N ≥ 0.

Implication of Assumption 1: Assumption 1 has the implication that the agent state does not change the state between consecutive epochs $t_{i-1}$ and $t_i$. More precisely, a trajectory τ is a step function that is right continuous with left limits, with discontinuities at $t_0$, ti, ..., $t_N$. In particular, $\lim_{s\downarrow t} \tau(s) = \tau(t)$ so that for any time instant $s \in \mathbb{R}_+$ , $\tau(s) = \tau(\min(\max(t_{n(s)}, t_0), t_N,))$, where $n(s) = \max\{n \in \{0,...,N\} : t_n \le s\}$

Let B(r(t)) denote a "bounding set" that entirely contains a road agent along a trajectory τ at time *t*, where B(r(t)) is given in the coordinate system under consideration. For example, B(r(t)) may be the minimal circle that inscribes the road agent and whose center is the centroid of the agent's geometry.

Assumption 2: It is assumed that all agent positional information, as well as road geometry, occlusions, etc., are given with respect to a common metric space with a well-defined distance function *d*.

Assumption 3: While the implementation-level specification of the bounding set B(r(t)) is, in some embodiments, immaterial with respect to the level of requirements presented herein, it is assumed that the bounding set satisfies both of the following conditions:

1. It is a safe over-approximation, that is, it contains the entire road agent; and
2. The "minimum" distance between two bounding sets corresponding to two different agents, as well as the distance between the bounding set of a road agent and road elements (such as traffic lights, lanes, etc.) are efficiently computable.

Let $t_s(\tau) = \max\{t \in \{t_0,...,t_N\} : \|\tau(t).p'\| > 0\}$, where $\tau(t).p \in \mathbb{R}^2$ where $\tau(t).p \in \mathbb{R}^2$ denotes the position (sub) vector of waypoint $\tau(t)$, and $\tau|(t).p'$ is the Jacobian (velocity vector) of the position of the agent at time *t* along trajectory τ; i.e., $t_s(\tau)$ is the first time at which the agent will arrive to a full stop, where $t_s(\tau) = t_N$ if no such *n* exists. The norm in the definition is that induced by the metric *d*.

*Requirements*

In various embodiments, each requirement will have at least one of the following attributes: (1) Unique identification; (2) a status of "proposed," "assumed," "accepted," "reviewed," "delivered," or "verified;" and (3) an identified automotive safety integrity level (ASIL). For example, it is assumed that all requirements herein are technical safety requirements (TSRs) with an integrity level ASIL B(D) that contribute to the achievement of an ASIL D → ASIL B(D) + ASIL B(D) decomposition of the Trajectory Checking safety function. Generally, for the purposes of discussion of requirements below, the key words "MUST," "MUST NOT," "REQUIRED," "SHALL," "SHALL NOT," "SHOULD," "SHOULD NOT," "RECOMMENDED," "MAY," and "OPTIONAL" are interpreted as described in Network Working Group Request for Comments 2119 (RFC2119), published March 1997, at: https://tools.ietf.org/html/rfc2119.

The TC requirements generally fall into one of the following categories:

- Timing

   a. Handle case of no valid plan existing. E.g., The TC SHALL output an empty safe trajectory set if none of the input ego trajectories are safe. (SSAs are considered at this point) Example: External environmental change such as a suddenly appearing obstacle
   b. Handle case of planner not able to find a valid plan in a timely manner, even if one might exist

- Ego vehicle trajectory plausibility checks;

   a. Each vector at trajectory waypoint is feasible;
   b. Trajectory exists within "epsilon" of bicycle model
   c. For both (a) and (b), see requirement SAF-TC-0001, described below

- Ego vehicle road boundary checks;

    a. Stay within drivable area (e.g., not sidewalk)

- Collision detection between ego vehicle and other perceived road object trajectories

    a. Avoid collision with current location of objects + epsilon.

        ▪ See requirement SAF-TC-0002, below

    b. Avoid collision with predicted location of objects + epsilon

        ▪ See requirement SAF-TC-0003, below

    c. Describe relationship of perception to categorization of obstacles.

        ▪ EXAMPLES: Obstacles categorized as "must not hit", "can hit if necessary", "not an obstacle"

    d. Spatial clearance goals based on object type.

        ▪ Currently, a uniform $\varepsilon$ is specified for all object types as given in requirements SAF-TC-0002 and SAF-TC-0003, below

    e. Reaction of TC to no trajectory proposed for a dynamic agent. In some embodiments, the TC may treat the agent as a static object and apply a "check-in" requirement" as described in SAF-TC-0002, below. In other embodiments, the TC "hypothesizes" a "worst-case" trajectory and checks and applies SAF-TC-0003, below, against this hypothesized trajectory.

- Traffic Control related checks

*AV Trajectory Plausibility Checks*

In some cases, the dynamic model of vehicle motion used for the AV is the pure dynamic bicycle model. The following includes discussion of various AV trajectory plausibility checks:

[SAF-TC-0001][proposed][ASIL B(D)]: The TC SHALL ensure that an input AV trajectory is physically executable by the AV. For an AV trajectory $\tau$ and given checking horizon $h > 0$ with $h = \infty$ if $\tau$ is an SSA, let $H(\tau) \equiv \max\{n \in \{0, \ldots, N\} : t_n \leq h\}$ with $H(\tau) = 0$ if no such $n$ exists. Trajectory $\tau$ is physically executable if all of the following holds:

1. (stability) For a given maximum deviation tolerance $\Delta > 0$ from the Pure Dynamic Bicycle Model and for every $n \in \{1,\ldots,H(\tau)\}$, $\|\tau(t_n) - \text{NextState}(\tau(t_{n-1}), u_{n-1})\| \leq \Delta$ SHALL hold, where $\text{NextState}(r(t_{n-1}), u_{n-1})$ is the next waypoint at epoch $n$ generated from waypoint $\tau(t_{n-1})$ according to the Pure Dynamic Bicycle Model when applying control $u_{n-1}$.

For every $n \in \{1,\ldots,H(r)\}$ the following SHALL hold for waypoint $\tau(t_n)$:

a. The forward acceleration is at most 0.8 m/s$^2$
b. The longitudinal acceleration is at most 3.5 m/s$^2$
c. The lateral acceleration is at most 6.0 m/s$^2$
d. The jerk is at most 50.0 m/s$^3$
e. The steering rate is at most 0.3
f. The steering acceleration is at most 10

The stability check in the foregoing requirement may be decomposed into checking every component in a waypoint individual with a parameter-specific deviation tolerances. More precisely, given maximum deviation tolerances

$(\Delta_1, \ldots \Delta_k) \in \mathbb{R}^k_{\cdot}$ and for every $n \in \{1,\ldots,H(\tau)\}$, $\|\tau_i(t_n) - \text{NextState}_i(\tau(t_{n-1}), u_{n-1})\| \leq \Delta_i$ SHALL hold for every $i \in \{1,\ldots,k\}$.

Requirement SAF-TC-0001 handles both nominal and SSA trajectories. An SSA trajectory needs to be checked entirely up to its given horizon $t_N$ irrespective of the given checking horizon. This is specified by setting the given checking horizon h to ∞ if the trajectory under check is an SSA.

[SAF-TC-0004][proposed][ASIL B(D)]: Among the set of input AV trajectories, the TC SHALL drop the trajectories that are generated prior to the latest trajectory generator execution cycle.

[SAF-TC-0005][proposed][ASIL B(D)]: The TC SHALL output an empty AV trajectory set in response to an empty set of input AV trajectories.

[SAF-TC-0006][proposed][ASIL B(D)]: The TC SHALL produce its output trajectory set at or before the initiation of its next execution cycle.

[SAF-TC-0007][proposed][QM]: The trajectory set output by the TC SHALL be ordered by non-decreasing ranking according to the ranking specified by the trajectory ranker for the input trajectory set; i.e., the trajectory with the least legal rule violation SHALL be output first.

*AV Road Boundary Checks*

The following includes discussion of an AV vehicle road boundary check:

[SAF-TC-0008][proposed][ASIL B(D)]: The TC SHALL ensure that the AV stays within a predefined minimum separation distance away from the provided drivable area bounds for every waypoint on a given AV trajectory.

If the drivable area is specified as a set of (at least one) path-minimum separation pairs

$$\{(f_i, \alpha_i)\}, \quad f_i : [a_i, b_i] \to \mathbb{R}^2$$

, then an ego trajectory $\tau$ is said to be within the drivable area if for every *i* and every $t \le \min(h, t_N)$, $d(r(t), f_i) = \min\{d(B(\tau(t)), f_i(x)) : x \in [a_i, b_i]\} > \alpha_i$ holds.

*Collision Detection Between AV and Other Perceived Road Objects*

The following includes discussion of collision detection between an AV and other perceived road objects. For the purpose of discussion herein, let *d(X, Y)* denote the (minimum) distance between two subsets *X, Y* of a metric space equipped with distance (metric) *d;* i.e., *d(X, Y)* = min{*d(x, y)* : *x* ε *X*, *y* ε *Y*}:

[SAF-TC-0002][proposed][ASIL B(D)]: For current input AV state $s_{ego}$ and minimum clearance ε > 0 distance, the TC SHALL ensure that $d(B(s_{ego}), B(o)) > ε$ for the most recently perceived tracked objects o.

For two trajectories $\tau_1$ and $\tau_2$ with stopping times $t_s^1 \equiv t_s(\tau_1)$ and $t_s^2 \equiv t_s(\tau_2)$, and for given clearance distance ε > 0, safe angle Θ > 0, and collision checking horizon *h* > 0 with *h* = ∞ if either $\tau_1$ or $\tau_2$ is an SSA, trajectories $\tau_1$ and $\tau_2$ are NOT colliding over the interval spanning current time until h ahead of the current time if either of the following holds:

1. both agents will be away from each other until they are both at a full stop: for every

$$t \in \left(0, \min\left\{h, \max\left\{t_s^1, t_s^2\right\}\right\}\right]$$, $d(B(\tau_1(t)), B(\tau_2(t))) > \varepsilon$; OR

2. the agents will be away from each other until the first one is at a full stop, and at that time, the velocity vector of the second one points away from the first vehicle: If $t_s^1 < h$, then for every $t \in \left(0, t_s^1\right]$, $d(B(\tau_1(t)), B(\tau_2(t))) > \varepsilon$, and, with $[p_1 \ p_2] \in \arg\min d\left(B(\tau_1(t_s^1)), B(\tau_2(t_s^1))\right)$ being any pair of points (vectors) in the bounding sets of waypoints $\tau_1(t_s^1)$ and $\tau_2(t_s^1)$, respectively, that achieve the minimum distance, the absolute value of the angle between the vectors $(p_2 - p_1)$ and $p_2'$ is at most $\Theta$, where $p_2'$ is the Jacobian (velocity vector) of the position of the agent at time $t_s^1$ along trajectory $\tau_2$.

Generally, the statement "trajectory $\tau_1$ does not collide with trajectory $\tau_2$" is expressed as $\tau 1 \cap \tau_2 = \emptyset$. Note: The collision operator ∩ is not commutative. That is: $\tau_1 \cap \tau_2 = \emptyset$ does not necessarily imply that $\tau_2 \cap \tau_1 = \emptyset$.

Two trajectory sets $\mathcal{T}_1$ and $\mathcal{T}_2$ are not colliding, denoted as $\mathcal{T}_1 \cap \mathcal{T}_2 = \emptyset$, if $\tau_1 \cap \tau_2 = \emptyset$ for every $\tau_1 \in \mathcal{T}_1$ and $\tau_2 \in \mathcal{T}_2$. A trajectory $\tau$ does not collide with a trajectory set $\mathcal{T}$, denoted as $\tau \cap \mathcal{T} = \emptyset$, if $\tau \cap \tau' = \emptyset$ for every $\tau' \in \mathcal{T}$.

[SAF-TC-0003][proposed][ASIL B(D)]: For perceived agents $a_1, ..., a_m$ with predicted trajectory sets $\mathcal{T}_{a_1}, ..., \mathcal{T}_{a_m}$ and a given collision checking horizon *h* > 0, the TC SHALL deem an AV input trajectory $\tau_{ego}$ collision-free if both $\tau_{ego} \cap$

$\mathcal{T}_{a_j} = \emptyset$ and $\mathcal{T}_{a_j} \cap \tau_{ego} = \emptyset$ for every $j \in \{1,...,m\}$.

<u>Example of Trajectory Safety Checking</u>

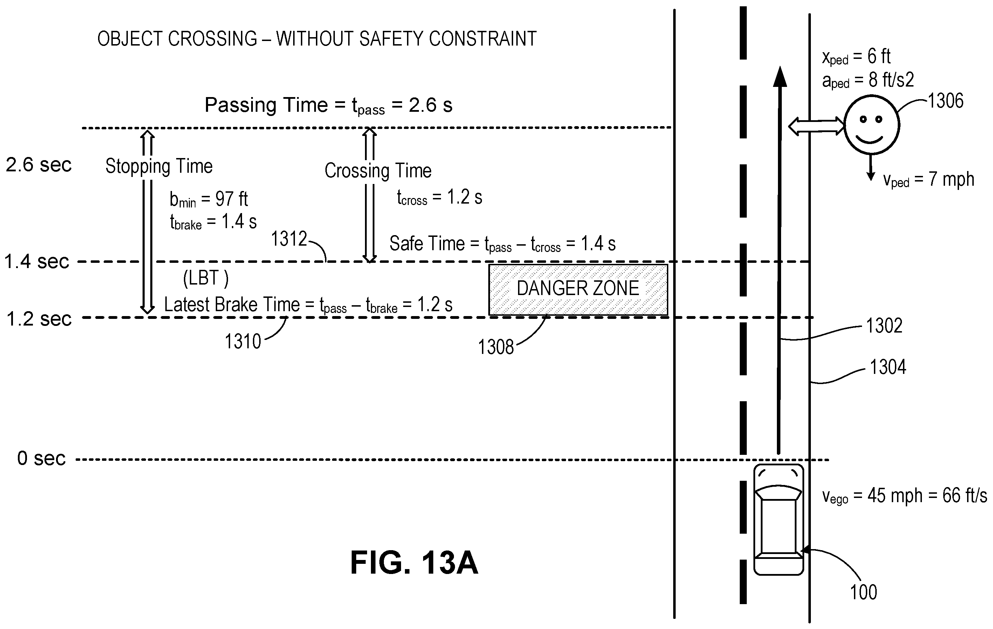

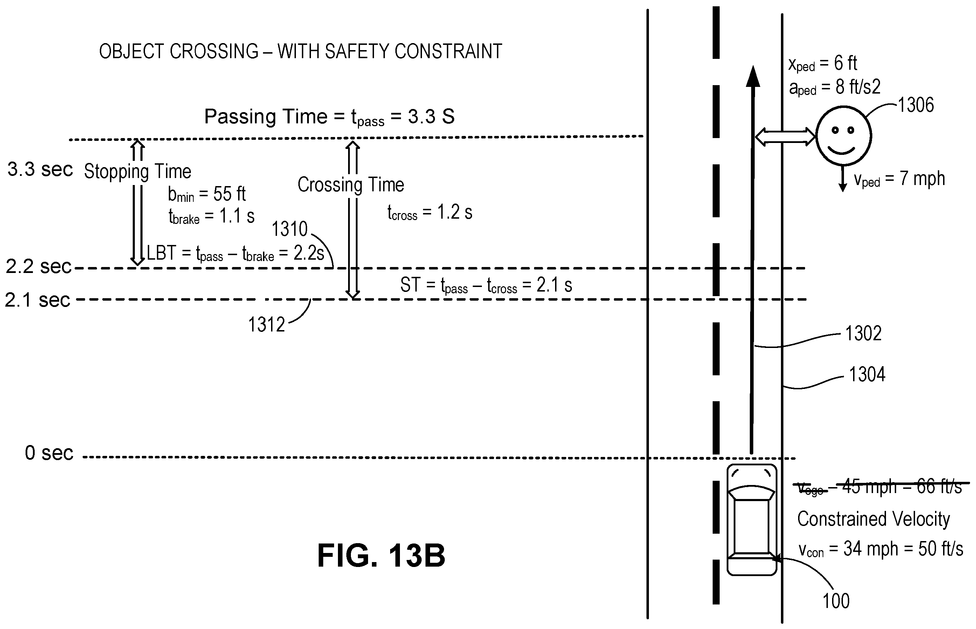

FIGS. 13A and 13B illustrate an example of trajectory safety checking and corresponding adjustments. In an embodiment, the safety checking is performed by the TC component of the planning system 400, following the rules described in the preceding section. Based on the safety checking, the TC adjusts the trajectory as needed, as described below.

In the example of FIGS. 13A and 13B, an AV, e.g., vehicle 100, is driving following a trajectory 1302 on a road surface 1304. Another moving object 1306 is detected, e.g., by the perception system 402, on the side of the road 1304 (e.g., on the right sidewalk) at a distance, e.g., 200 feet away. The object 1306 can be a pedestrian, a cyclist, an animal, another vehicle, or some other suitable object (e.g., a self-propelled cart). At the time the object 1306 is detected, it is on the sidewalk horizontally located six feet from the front right corner of the car, and moving parallel to the trajectory 1302 of the vehicle 100, in the opposite direction to that of the vehicle 100. This information is provided to the TC.

Upon receiving the information about the object 1306, the TC predicts, as part of the safety check for the trajectory 1302, that at a random time instant the object 1306 may turn hard right and start crossing the road 1304 in front of the vehicle 100. As described by the equations in the example below, the TC determines that, given maximum acceleration, it will take 1.2 seconds (from the present time) for the object 1306 to get in front of the vehicle (at its present position) (this is referred to as the crossing time, $t_{cross}$). The TC determines that the vehicle 100 will have moved past the object 1306 (passing time, $t_{pass}$) in 2.6 seconds from its present position at its current velocity. For the vehicle to move past the object 1306 without collision, the vehicle has to be at the location indicated by line 1312 by at most 1.4 seconds (referred to as the "Safe Time," ST) before $t_{pass}$. Since the Safe Time is greater than $t_{cross}$, the vehicle 100 has to brake to avoid collision. The TC computes that it will take the vehicle 1.4 seconds (and 97 feet) to come to a stop before reaching the location where the object 1306 crosses the road 1304. Accordingly, the vehicle 100 has to start braking in at most 1.2 seconds from the present time, at the location indicated by the line 1310. This time is referred to as the "Latest Brake Time" (LBT).

- Assumptions:

   o Constant velocities of the vehicle 100 ($v_{ego}$) and the object 1306 ($v_{ped}$) in y-axis
   o Starting distance of the vehicle 100 from the object 1306 ($y_{ped}$)
   o Constant acceleration of the object 1306 ($a_{ped}$) in x-axis (once the object 1306 takes a right turn and starts to move towards the road 1304)

- Time it takes the vehicle 100 to pass the object 1306 ($t_{pass}$)

   o

$$t_{pass} = y_{ped} / (v_{ped} + v_{ego})$$

- Time it takes the object 1306 to be on the road 1304 in front of the vehicle 100 ($t_{cross}$)

   o

$$t_{cross} = SQRT(2 * x_{ped} / a_{ped})$$

   ■ SQRT represents the square root operation

- Time before passing at which braking must start ($t_{brake}$)

   o

$$t_{brake} = b_{min}/v_{ego} = v_{ego}/(2*\mu*g),$$

where:

- $\mu$ = friction coefficient
- g = gravity
- 

$$b_{min} = \text{minimum braking distance} = v^2{}_{ego} / (2*\mu*g)$$

In the illustrated example, the TC determines, based on information from the perception system 402, that:

o Velocity (speed) of vehicle 100, $v_{ego}$ = 45 mph = 66 ft/s
o Velocity of the object 1306 (in the opposite direction of the vehicle), $v_{ped}$ = 7 mph
o Starting distance of the vehicle 100 from the object 1306 (at the time of computation by the TC), $y_{ped}$ = 200 ft
o Constant acceleration of the object 1306 in x-axis, $a_{ped}$ = 8 ft/s$^2$
o Distance of the object 1306 from the road 1304, $x_{ped}$ = 6 ft

Upon performing computations with the above equations using the values above, the TC determines that $t_{pass}$ is 2.6 seconds, while the time (from the present instant) at which the object 1306 is expected to be in the path of the vehicle 100, $t_{cross}$ is 1.2 seconds. The vehicle 100 will have avoided the collision if it has crossed the line 1312 before the object 1306 gets to that location, and the corresponding Safe Time (ST) is 1.4 seconds. The TC computes $t_{brake}$ to be 1.4 seconds, and Latest Brake Time (LBT) is 1.2 seconds. Accordingly, the TC determines that there exists a danger zone 1308 between the ST/location indicated by line 1312 and the LBT/location indicated by line 1310, where:

1. The object 1306 has sufficient time to get in front of the vehicle 100 before the vehicle 100 has driven past the object 1306; AND
2. The vehicle 100 does not have sufficient time or distance to brake to avoid collision with the object 1306 when the latter is on the road in front of the vehicle.

Following determination of the danger zone 1308, the TC concludes that the ego vehicle trajectory 1302 is no longer safe, and takes actions to ensure that collision with the object 1306 is avoided. For example, in an embodiment, the TC updates the trajectory 1302 by adjusting the velocity of the vehicle 100 as described below, causing the planning system 404 to send the update to the control system 406, which in turn adjusts the driving behavior of the vehicle 100 to avoid collision with the object 1306.
The TC determines that the danger zone 1308 can be eliminated, or the size of the danger zone 1308 can be limited, by applying a speed (velocity) constraint to the vehicle 100, reducing the velocity of the vehicle 100. As described by the equations in the example below, the TC computes a speed constraint that will set the danger zone to zero.

- Speed Constraint to avoid danger zone $\rightarrow$ must have $t_{brake} < t_{cross}$ at minimum

    o

$$v_{ego} < 2 * mu * g * \text{SQRT}(2 * x_{ped} / a_{ped}) * (1\text{-}SF)$$

where

- SF = Safety Factor, having a value in the range 0% to 100%

The above computation assumes that the speed constraint depends only on the horizontal distance of the pedestrian. However, a speed constraint can also be computed in a similar manner taking into account both horizontal and vertical distances of the pedestrian.
Applying the above equation using the example values mentioned previously, the TC determines that the velocity of the vehicle 100 has to be reduced, and computes the reduced velocity to be 34 mph = 50 ft/s. This is illustrated in FIG. 13B as constrained velocity $v_{con}$. As shown in FIG. 13B, upon applying the updated speed $v_{con}$, $t_{pass}$ changes to 3.3 seconds while $t_{brake}$ decreases to 1.1 seconds. Accordingly, the ST increases to 1.4 seconds (indicating that the vehicle can be safely farther away from the location of the object 1306). The LBT increases to 2.2 seconds, while the minimum braking distance $b_{min}$ decreases from 97 feet to 55 feet, indicating that the vehicle 100 has more braking time, and will require a less stopping distance, to avoid collision with the object 1306. As shown by FIG. 13B, with the constrained speed, the vehicle 100 is predicted to reach the location 1312, corresponding to the Safe Time (ST), earlier than reaching the location 1310 corresponding to the Latest Braking Time (LBT). The TC thus eliminates the danger zone by reducing the velocity of the vehicle 100 by an appropriate amount.

While the TC determines to reduce the velocity of the vehicle in the example embodiment above, in some embodiments, the TC may determine, using the above computations, to increase the velocity of the vehicle, such that the vehicle accelerates and quickly moves past the object 1306 before the object crosses the path 1304, thus avoiding a collision. Additionally or alternatively, in an embodiment, the TC avoids a collision by modifying the trajectory 1302 such that the path travelled by the vehicle 100 changes. For example, the TC may determine to heading of the vehicle 100 (in addition or as an alternative to adjusting the velocity) such that the vehicle swerves and moves around the object 1306.

In an embodiment, the TC re-computes values of the various variables using the above equations every cycle to update the distance of the object 1306, the danger zone 1308, and the speed constraint.

In an embodiment, the perception system 402 detects multiple objects in the environment of the vehicle's trajectory 1302, and the information about these objects is provided to the TC. Upon receiving this information, the TC selects one of the objects that is determined to be closest to the trajectory 1302 (that is, closest to the road 1304) as the object most likely to cause a collision with the vehicle 100, and determines a distance of the object from the present location of the vehicle. The TC uses the determined distance to calculate the size of the danger zone. In the above example, assuming multiple objects are detected, the object 1306 is taken to be the object that is closest to the trajectory 1302, and the danger zone 1308 is determined accordingly.

Example Process for Trajectory Safety Checking

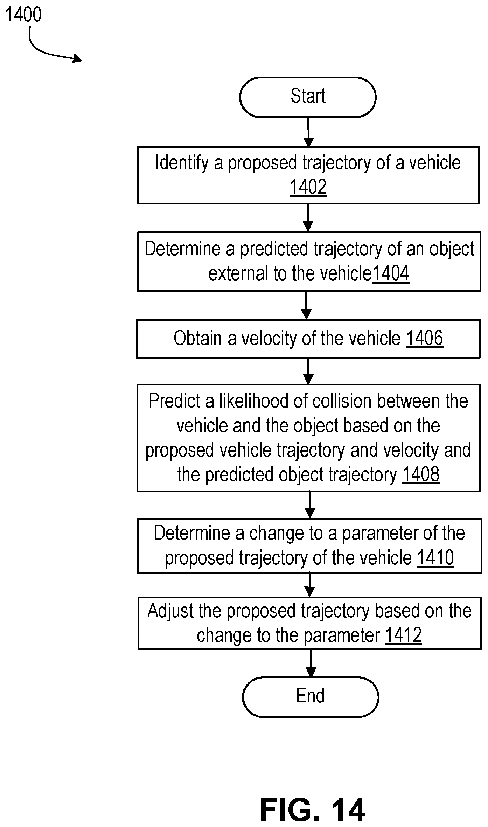

FIG. 14 shows an example process 1400 for performing safety checks on one or more trajectories of a vehicle. In some embodiments, the process 1400 is performed by a trajectory checker (TC) component of a planning system of a vehicle, for example, by one or more processors that implement the operations of the TC component of the planning system 404 of the vehicle 100, as described in the preceding sections. Accordingly, the process 1400 is described in the following sections with respect to the vehicle 100 and the planning system 404, including the TC component of the planning system 404, and the safety checking example described with respect to FIGS 13A-13B. However, the process 1400 can also be applied to other safety check scenarios, or performed by other devices, or both.

In the process 1400, the TC component identifies a proposed trajectory of a vehicle (1402). For example, the TC component device obtains the trajectory of the vehicle 100 from the planning system 404. As described with respect to FIGS. 13A-13B, the TC can obtain the trajectory 1302 of the vehicle 100 traveling on the road surface 1304.

The TC determines a predicted trajectory of an object external to the vehicle (1404). For example, the TC obtains information about one or more objects detected by the perception system 402, including the object 1306. The TC determines that the object 1306 is closest to the trajectory of the vehicle 100, and predicts a trajectory of the object 1306 using the obtained information, as described with respect to FIGS. 13A-13B. The TC determines that the predicted trajectory of the object 1306 includes crossing the road 1304, in the path of the vehicle 100.

The TC obtains a velocity of the vehicle (1406). For example, the TC obtains the velocity of the vehicle 100, $v_{ego}$.

The TC predicts a likelihood of collision between the vehicle and the object based on the proposed vehicle trajectory and velocity and the predicted object trajectory (1408). For example, with knowledge about the trajectories, velocities, and positions of the vehicle 100 and the object 1306, the TC performs the computations as described with respect to FIGS. 13A-13B. Upon doing so, the TC determines that there exists the danger zone 1308 for the vehicle 100 to collide with the object 1306 as the latter crosses the road 1304.

The TC determines a change to a parameter of the proposed trajectory of the vehicle (1410). For example, upon determining the likelihood of collision between the vehicle 100 and the object 1306, the TC applies a safety constraint to the vehicle 100. As described with respect to FIGS. 13A-13B, the safety constraint is applied to the velocity $v_{ego}$ with which the vehicle 100 is traveling along the trajectory 1302. In the disclosed example, the TC computes a constrained velocity, $v_{con}$, for the vehicle 100 by applying the safety constraint.

The TC adjusts the proposed trajectory based on the change to the parameter (1412). For example, the TC slows down the speed of the vehicle 100 along its trajectory 1302 by applying the constrained velocity $v_{con}$. By doing so, the TC eliminates the danger zone 1308 as described with respect to FIGS. 13A-13B, and thus reduces the likelihood that the vehicle 100 will collide with the object 1306.

In the foregoing description, embodiments of the invention have been described with reference to numerous specific details that may vary from implementation to implementation. The description and drawings are, accordingly, to be regarded in an illustrative rather than a restrictive sense. Any definitions expressly set forth herein for terms contained in the claims shall govern the meaning of such terms as used in the claims. In addition, when we use the term "further comprising," in the foregoing description or following claims, what follows this phrase can be an additional step or entity, or a sub-step/sub-entity of a previously-recited step or entity.

**Claims**

1. A method (1400) comprising:

   identifying (1402), by at least one processor of a vehicle (100), a proposed trajectory (1302) of the vehicle;
   determining (1404), by the at least one processor, a predicted trajectory of an object (1306) external to the vehicle;
   obtaining (1406), by the at least one processor, a velocity of the vehicle;
   predicting (1408), by the at least one processor based on the proposed trajectory and velocity of the vehicle and the predicted trajectory of the object, a likelihood of collision between the vehicle and the object, wherein predicting the likelihood of collision comprises

   predicting, using the predicted trajectory of the object and the proposed trajectory of the vehicle, a crossing time at which the object will cross the path of the vehicle,
   computing, using the velocity of the vehicle, a first braking time for the vehicle to come to a stop,
   determining that the first braking time is greater than the crossing time, and
   in response to determining that the first braking time is greater than the crossing time, predicting the likelihood of collision;

   in response to predicting the likelihood of collision, determining (1410), by the at least one processor, a change to a parameter of the proposed trajectory of the vehicle; and
   adjusting (1412), by the at least one processor, the proposed trajectory based on the change to the parameter.

2. The method (1400) of claim 1, wherein the parameter includes the velocity of the vehicle (100), and wherein

   determining (1410) a change to the parameter of the proposed trajectory (1302) comprises reducing the velocity of the vehicle, and
   adjusting (1412) the proposed trajectory based on the change to the parameter comprises slowing down a speed of the vehicle.

3. The method (1400) of any one of claims 1 or 2, further comprising:

   obtaining a present location of the object (1306);
   determining, using the velocity of the vehicle (100) and the present location of the object, a passing time at which the vehicle can move past the object before the object crosses the path of the vehicle;
   computing, using the passing time and the crossing time, a safe time available to the vehicle to move past the object before the object crosses the path of the vehicle;
   determining that the first braking time is greater than the safe time; and
   upon determining that the first braking time is greater than the safe time, predicting the likelihood of collision.

4. The method (1400) of claim 3, wherein the first braking time corresponds to a first location of the vehicle (100) on the path and the safe time corresponds to a second location of the vehicle on the path, and
   wherein the second location is closer to the present location of the object (1306) compared to the first location.

5. The method (1400) of any one of claims 1 or 2, wherein the parameter includes the velocity of the vehicle (100) and determining (1410) a change to the parameter of the proposed trajectory (1302) comprises reducing the velocity of the vehicle, the method further comprising:

   computing, using the reduced velocity of the vehicle, a second braking time for the vehicle to come to a stop;
   determining that the second braking time is less than the crossing time; and
   in response to determining that the second braking time is less than the crossing time, predicting that the likelihood of collision is reduced.

6. The method (1400) of any one of claims 1 to 5, further comprising checking, by the at least one processor, plausibility of the proposed trajectory (1302) of the vehicle (100).

7. The method (1400) of any one of claims 1 to 6, further comprising comparing, by the at least one processor, the proposed trajectory (1302) to a road boundary.

8. The method (1400) of any one of claims 1 to 7, wherein the object (1306) is one of a pedestrian, an animal, a cyclist, or another vehicle (100).

9. The method (1400) of any one of claims 1 to 8, wherein the vehicle (100) includes an autonomous vehicle, AV.

10. One or more non-transitory computer-readable media comprising instructions that, upon execution by at least one processor of a vehicle (100), cause the at least one processor to perform the method (1400) of any one of claims 1 to 9.

11. An apparatus comprising:

> at least one processor of a vehicle (100); and
> one or more computer-readable media comprising instructions that, upon execution, cause the at least one processor to perform the method (1400) of any one of claims 1 to 9.

**Patentansprüche**

1. Verfahren (1400), das Folgendes umfasst:

> Identifizieren (1402) durch mindestens einen Prozessor eines Fahrzeugs (100) einer vorgeschlagenen Bahn (1302) des Fahrzeugs;
> Bestimmen (1404) durch den mindestens einen Prozessor einer vorhergesagten Bahn eines Objekts (1306) außerhalb des Fahrzeugs;
> Erhalten (1406) durch den mindestens einen Prozessor einer Geschwindigkeit des Fahrzeugs;
> Vorhersagen (1408) durch den mindestens einen Prozessor auf der Grundlage der vorgeschlagenen Bahn und der Geschwindigkeit des Fahrzeugs und der vorhergesagten Bahn des Objekts einer Wahrscheinlichkeit einer Kollision zwischen dem Fahrzeug und dem Objekt, wobei das Vorhersagen der Wahrscheinlichkeit einer Kollision Folgendes umfasst:
>
>> Vorhersagen unter Verwendung der vorhergesagten Bahn des Objekts und der vorgeschlagenen Bahn des Fahrzeugs einer Kreuzungszeit, zu der das Objekt den Pfad des Fahrzeugs kreuzen wird,
>> Berechnen unter Verwendung der Geschwindigkeit des Fahrzeugs einer ersten Bremszeit, damit das Fahrzeug zu einem Stopp kommt,
>> Bestimmen, dass die erste Bremszeit größer als die Kreuzungszeit ist, und
>> in Reaktion auf ein Bestimmen, dass die erste Bremszeit größer als die Kreuzungszeit ist, Vorhersagen der Wahrscheinlichkeit einer Kollision;
>> in Reaktion auf ein Vorhersagen der Wahrscheinlichkeit einer Kollision Bestimmen (1410) durch den mindestens einen Prozessor einer Änderung eines Parameters der vorgeschlagenen Bahn des Fahrzeugs und
>> Anpassen (1412) durch den mindestens einen Prozessor der vorgeschlagenen Bahn auf der Grundlage der Änderung des Parameters.

2. Verfahren (1400) nach Anspruch 1, wobei der Parameter die Geschwindigkeit des Fahrzeugs (100) enthält und wobei

> das Bestimmen (1410) einer Änderung des Parameters der vorgeschlagenen Bahn (1302) ein Verringern der Geschwindigkeit des Fahrzeugs umfasst und
> das Anpassen (1412) der vorgeschlagenen Bahn auf der Grundlage der Änderung des Parameters ein Verringern eines Geschwindigkeitsbetrags des Fahrzeugs umfasst.

3. Verfahren (1400) nach einem der Ansprüche 1 oder 2, das ferner Folgendes umfasst:

> Erhalten eines gegenwärtigen Orts des Objekts (1306);
> Bestimmen unter Verwendung der Geschwindigkeit des Fahrzeugs (100) und des gegenwärtigen Orts des Objekts einer Vorbeifahrtzeit, zu der das Fahrzeug sich am Objekt vorbeibewegen kann, bevor das Objekt den Pfad des Fahrzeugs kreuzt;
> Berechnen unter Verwendung der Vorbeifahrtzeit und der Kreuzungszeit einer sicheren Zeit, die verfügbar ist, damit das Fahrzeug sich am Objekt vorbeibewegen kann, bevor das Objekt den Pfad des Fahrzeugs kreuzt;
> Bestimmen, dass die erste Bremszeit größer als die sichere Zeit ist; und

aufgrund eines Bestimmens, dass die erste Bremszeit größer als die sichere Zeit ist, Vorhersagen der Wahrscheinlichkeit einer Kollision.

**4.** Verfahren (1400) nach Anspruch 3, wobei die erste Bremszeit einem ersten Ort des Fahrzeugs (100) auf dem Pfad entspricht und die sichere Zeit einem zweiten Ort des Fahrzeugs auf dem Pfad entspricht und der zweite Ort im Vergleich zum ersten Ort näher beim gegenwärtigen Ort des Objekts (1306) ist.

**5.** Verfahren (1400) nach einem der Ansprüche 1 oder 2, wobei der Parameter die Geschwindigkeit des Fahrzeugs (100) enthält, das Bestimmen (1410) einer Änderung des Parameters der vorgeschlagenen Bahn (1302) ein Verringern der Geschwindigkeit des Fahrzeugs umfasst und das Verfahren ferner Folgendes umfasst:

Berechnen unter Verwendung der verringerten Geschwindigkeit des Fahrzeugs einer zweiten Bremszeit, damit das Fahrzeug zu einem Stopp kommt;
Bestimmen, dass die zweite Bremszeit kleiner als die Kreuzungszeit ist; und
in Reaktion auf ein Bestimmen, dass die zweite Bremszeit kleiner als die Kreuzungszeit ist, Vorhersagen, dass die Wahrscheinlichkeit einer Kollision verringert ist.

**6.** Verfahren (1400) nach einem der Ansprüche 1 bis 5, das ferner ein Prüfen durch den mindestens einen Prozessor der Plausibilität der vorgeschlagenen Bahn (1302) des Fahrzeugs (100) umfasst.

**7.** Verfahren (1400) nach einem der Ansprüche 1 bis 6, das ferner ein Vergleichen durch den mindestens einen Prozessor der vorgeschlagene Bahn (1302) mit einer Fahrbahnbegrenzung umfasst.

**8.** Verfahren (1400) nach einem der Ansprüche 1 bis 7, wobei das Objekt (1306) eines eines Fußgängers, eines Tiers, eines Fahrradfahrers oder eines weiteren Fahrzeugs (100) ist.

**9.** Verfahren (1400) nach einem der Ansprüche 1 bis 8, wobei das Fahrzeug (100) ein autonomes Fahrzeug, AV, umfasst.

**10.** Ein oder mehrere nicht transistorische computerlesbare Medien, die Befehle enthalten, die aufgrund einer Ausführung durch mindestens einen Prozessor eines Fahrzeugs (100) verursachen, dass der mindestens eine Prozessor das Verfahren (1400) nach einem der Ansprüche 1 bis 9 durchführt.

**11.** Vorrichtung, die Folgendes umfasst:

mindestens einen Prozessor eines Fahrzeugs (100) und
ein oder mehrere computerlesbare Medien, die Befehle enthalten, die aufgrund einer Ausführung verursachen, dass der mindestens eine Prozessor das Verfahren (1400) nach einem der Ansprüche 1 bis 9 durchführt.

**Revendications**

**1.** Procédé (1400) comportant :

l'identification (1402), par au moins un processeur d'un véhicule (100), d'une trajectoire proposée (1302) du véhicule ;
la détermination (1404), par le ou les processeurs, d'une trajectoire prédite d'un objet (1306) extérieur au véhicule ;
l'obtention (1406), par le ou les processeurs, d'une vitesse du véhicule ;
la prédiction (1408), par le ou les processeurs d'après la trajectoire proposée et la vitesse du véhicule et la trajectoire prédite de l'objet, d'une probabilité de collision entre le véhicule et l'objet, la prédiction de la probabilité de collision comportant
la prédiction, à l'aide de la trajectoire prédite de l'objet et de la trajectoire proposée du véhicule, d'un temps de croisement auquel l'objet croisera le chemin du véhicule,
le calcul, à l'aide de la vitesse du véhicule, d'un premier temps de freinage pour que le véhicule s'immobilise,
le fait de déterminer que le premier temps de freinage est supérieur au temps de croisement, et
en réaction à la détermination du fait que le premier temps de freinage est supérieur au temps de croisement, la prédiction de la probabilité de collision ;

en réaction à la prédiction de la probabilité de collision, la détermination (1410), par le ou les processeurs, d'un changement d'un paramètre de la trajectoire proposée du véhicule ; et

l'ajustement (1412), par le ou les processeurs, de la trajectoire proposée d'après le changement du paramètre.

2. Procédé (1400) selon la revendication 1, le paramètre comprenant la vitesse du véhicule (100), et

la détermination (1410) d'un changement du paramètre de la trajectoire proposée (1302) comportant une réduction de la vitesse du véhicule, et

l'ajustement (1412) de la trajectoire proposée d'après le changement du paramètre comportant un ralentissement d'une vitesse du véhicule.

3. Procédé (1400) selon l'une quelconque des revendications 1 ou 2, comportant en outre :

l'obtention d'un emplacement actuel de l'objet (1306) ;

la détermination, à l'aide de la vitesse du véhicule (100) et de l'emplacement actuel de l'objet, d'un temps de dépassement auquel le véhicule peut dépasser l'objet avant que l'objet ne croise le chemin du véhicule ;

le calcul, à l'aide du temps de dépassement et du temps de croisement, d'un temps de sûreté dont dispose le véhicule pour dépasser l'objet avant que l'objet ne croise le chemin du véhicule ;

le fait de déterminer que le premier temps de freinage est supérieur au temps de sûreté ; et

suite à la détermination du fait que le premier temps de freinage est supérieur au temps de sûreté, la prédiction de la probabilité de collision.

4. Procédé (1400) selon la revendication 3, le premier temps de freinage correspondant à un premier emplacement du véhicule (100) sur le chemin et le temps de sûreté correspondant à un second emplacement du véhicule sur le chemin, et

le second emplacement étant plus proche de l'emplacement actuel de l'objet (1306) en comparaison du premier emplacement.

5. Procédé (1400) selon l'une quelconque des revendications 1 ou 2, le paramètre comprenant la vitesse du véhicule (100) et la détermination (1410) d'un

changement du paramètre de la trajectoire proposée (1302) comportant une réduction de la vitesse du véhicule, le procédé comportant en outre :

le calcul, à l'aide de la vitesse réduite du véhicule, d'un second temps de freinage pour que le véhicule s'immobilise ;

le fait de déterminer que le second temps de freinage est inférieur au temps de croisement ; et

en réaction à la détermination du fait que le second temps de freinage est inférieur au temps de croisement, le fait de prédire que la probabilité de collision est réduite.

6. Procédé (1400) selon l'une quelconque des revendications 1 à 5, comportant en outre une vérification, par le ou les processeurs, de la plausibilité de la trajectoire proposée (1302) du véhicule (100).

7. Procédé (1400) selon l'une quelconque des revendications 1 à 6, comportant en outre la comparaison, par le ou les processeurs, de la trajectoire proposée (1302) à une limite de route.

8. Procédé (1400) selon l'une quelconque des revendications 1 à 7, l'objet (1306) étant un objet parmi un piéton, un animal, un cycliste ou un autre véhicule (100) .

9. Procédé (1400) selon l'une quelconque des revendications 1 à 8, le véhicule (100) comprenant un véhicule autonome, AV.

10. Un ou plusieurs supports non transitoires lisibles par ordinateur comportant des instructions qui, suite à leur exécution par au moins un processeur d'un véhicule (100), amènent le ou les processeurs à réaliser le procédé (1400) selon l'une quelconque des revendications 1 à 9.

11. Appareil comportant :
au moins un processeur d'un véhicule (100) ; et un ou plusieurs supports lisibles par ordinateur comportant des instructions qui, suite à leur exécution, amènent le ou les processeurs à réaliser le procédé (1400) selon l'une quelconque des revendications 1 à 9.

**FIG. 1**

FIG. 2

**FIG. 3**

EP 4 309 019 B1

**FIG. 4**

502a    LiDAR    502b    RADAR    502d    TLD    502c    CAMERA

INPUTS

504a    504b    504d    504c

OUTPUTS

**FIG. 5**

**FIG. 6**

FIG. 7

FIG. 8

**FIG. 9**

**FIG. 10**

EP 4 309 019 B1

FIG. 11

INPUTS

CONTROLLER

1200

OUTPUTS

PLANNER — 404

1102

SPEED PROFILER 1202 → THROTTLE/BRAKE CONTROLLER 1204

1206 THROTTLE/BRAKE

LOCALIZATION — 408

LATERAL TRACKING CONTROLLER 1208 → STEERING WHEEL CONTROLLER 1210

1212 STEERING ACTUATOR

OTHER INPUTS — 1214

**FIG. 12**

OBJECT CROSSING – WITHOUT SAFETY CONSTRAINT

$x_{ped}$ = 6 ft
$a_{ped}$ = 8 ft/s2
— 1306

$v_{ped}$ = 7 mph

Passing Time = $t_{pass}$ = 2.6 s

2.6 sec — Stopping Time — Crossing Time

$b_{min}$ = 97 ft
$t_{brake}$ = 1.4 s

$t_{cross}$ = 1.2 s

1312 — Safe Time = $t_{pass} - t_{cross}$ = 1.4 s

1.4 sec

(LBT)
Latest Brake Time = $t_{pass} - t_{brake}$ = 1.2 s — DANGER ZONE

1.2 sec

1310 — 1308 —

1302

1304

0 sec

$v_{ego}$ = 45 mph = 66 ft/s

**FIG. 13A**

100

EP 4 309 019 B1

OBJECT CROSSING – WITH SAFETY CONSTRAINT

$x_{ped}$ = 6 ft
$a_{ped}$ = 8 ft/s2
— 1306

$v_{ped}$ = 7 mph

Passing Time = $t_{pass}$ = 3.3 S

3.3 sec  Stopping Time
$b_{min}$ = 55 ft
$t_{brake}$ = 1.1 s

Crossing Time

$t_{cross}$ = 1.2 s

1310

LBT = $t_{pass} - t_{brake}$ = 2.2s

2.2 sec

ST = $t_{pass} - t_{cross}$ = 2.1 s

2.1 sec

1312

1302

1304

0 sec

$v_{ego}$ = 45 mph = 66 ft/s

Constrained Velocity
$v_{con}$ = 34 mph = 50 ft/s

**FIG. 13B**

100

EP 4 309 019 B1

1400

```
              ┌──────────┐
              │  Start   │
              └────┬─────┘
                   ▼
   ┌───────────────────────────────────┐
   │ Identify a proposed trajectory of │
   │          a vehicle  1402          │
   └────────────────┬──────────────────┘
                    ▼
   ┌───────────────────────────────────┐
   │ Determine a predicted trajectory  │
   │ of an object external to the      │
   │ vehicle 1404                      │
   └────────────────┬──────────────────┘
                    ▼
   ┌───────────────────────────────────┐
   │  Obtain a velocity of the vehicle │
   │              1406                 │
   └────────────────┬──────────────────┘
                    ▼
   ┌───────────────────────────────────┐
   │ Predict a likelihood of collision │
   │ between the vehicle and the       │
   │ object based on the proposed      │
   │ vehicle trajectory and velocity   │
   │ and the predicted object          │
   │ trajectory 1408                   │
   └────────────────┬──────────────────┘
                    ▼
   ┌───────────────────────────────────┐
   │ Determine a change to a parameter │
   │ of the proposed trajectory of the │
   │ vehicle 1410                      │
   └────────────────┬──────────────────┘
                    ▼
   ┌───────────────────────────────────┐
   │ Adjust the proposed trajectory    │
   │ based on the change to the        │
   │ parameter 1412                    │
   └────────────────┬──────────────────┘
                    ▼
              ┌──────────┐
              │   End    │
              └──────────┘
```

# FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2902290 A1